(19) Europäisches Patentamt

European Patent Office

Office européen des brevets

(11) **EP 1 686 514 A1**

(12) **EUROPEAN PATENT APPLICATION**
published in accordance with Art. 158(3) EPC

(43) Date of publication:
02.08.2006 Bulletin 2006/31

(21) Application number: **04722681.6**

(22) Date of filing: **23.03.2004**

(51) Int Cl.:
***G06Q 10/00*** (2006.01)

(86) International application number:
**PCT/JP2004/003933**

(87) International publication number:
**WO 2005/041095 (06.05.2005 Gazette 2005/18)**

(84) Designated Contracting States:
**AT BE BG CH CY CZ DE DK EE ES FI FR GB GR HU IE IT LI LU MC NL PL PT RO SE SI SK TR**

(30) Priority: **23.10.2003 JP 2003396346**

(71) Applicants:
• **Intellectual Property Bank Corp.**
**Tokyo 105-0001 (JP)**
• **Masuyama, Hiroaki**
**Toyonaka-shi,**
**Osaka 560-0054 (JP)**

(72) Inventors:
• **MASUYAMA, Hiroaki**
**Toyonaka-shi, Osaka 5600054 (JP)**
• **MIYAMOTO, Kaoru**
**Toshima-ku,**
**Tokyo 171-0051 (JP)**

(74) Representative: **Style, Kelda Camilla Karen et al**
**Page White & Farrer,**
**54 Doughty Street**
**London WC1N 2LS (GB)**

(54) **ENTERPRISE EVALUATION DEVICE AND ENTERPRISE EVALUATION PROGRAM**

(57) There are provided an enterprise evaluation device and an enterprise evaluation program capable of acquiring a profit of a particular enterprise and the number of patents owned by the particular enterprise and calculating and outputting an index indicating a profit per one patent (or utility model) of the total number of patents. A manufacturing/sales profit and patent royalty income in a particular enterprise within a first predetermined period are acquired from financial affair database containing enterprise financial affair information. The official gazettes of patent applications registered by the particular enterprise within a second predetermined period are acquired from the database. The number of patents or the number of patent claims registered within a predetermined period is acquired as the number of inventions from the official gazettes. The number of inventions which have vanished until a predetermined time is acquired. The number of inventions acquired is subtracted by the number of inventions which have vanished so as to calculate the total number of valid patents. The sum of the manufacturing/sales profit and the patent royalty income is divided by the total number of valid patents so as to obtain a patent profitability, which is output to display means or the like to notify a user. Thus, it is possible to calculate and display the index indicating how much one patent contributes to an enterprise.

FIG. 10

**Description**

TECHNICAL FIELD

The present invention relates to an enterprise evaluation device and enterprise evaluation program capable of evaluating the value of respective enterprises based on finance information of such enterprises.

BACKGROUND ART

Japanese Patent Laid-Open Publication No. 2000-348015 describes a system, method and recording medium for evaluating an evaluation item based on first data having a predetermined renewal interval and second data having a renewal interval that is shorter than that of the first data. This evaluation system has (a) means for creating a first evaluation model according to input of the first data of the sample target, (b) means for applying the first data of the sample target to the first evaluation model and calculating first evaluation output, (c) means for creating a second evaluation model according to input of the second data and the first evaluation output of the sample targets, (d) means for applying the first data to the first evaluation model according to the input of the first data of an evaluation target and calculating second evaluation output, and (e) means for applying the second data and the second evaluation output of the evaluation target to the second evaluation model and calculating the evaluation output of the evaluation target, and thereby evaluates the evaluation item of the evaluation target that could change with time.

In the above-mentioned evaluation system, to predict changes in the enterprise evaluation derived from financial data in which the renewal period is relatively long such as every year or every quarter, data in which the renewal period is relatively short such as stock price, interest and currency exchange that fluctuate from day to day is used to reflect changes in the economy. In this system, enterprise evaluation is made in a timely manner at the point in time such evaluation is to be made.

Further, Japanese Patent Laid-Open Publication No. 2001-76042 describes an intellectual property evaluation device and intellectual property evaluation method for evaluating the proprietary nature of intellectual property relating to a pending or registered invention or the like. This evaluation device has an actual profit input means for inputting data regarding the actual profit, a present value rate input means for inputting data regarding the present value rate per year, a compound present value calculation means for calculating the compound present values of annual compensation by multiplying the data regarding the actual profit with the data regarding the present value rates per year, an intellectual property price calculation means for calculating an intellectual property price by totaling the calculated compound present value of the annual compensation amounts, and an output means for outputting the intellectual property value amount calculated with the intellectual property price calculation means.

The above-mentioned intellectual property evaluation device is to comprehend the asset value of currently remaining patents by depreciating registered patents and the related sales volume and profits. Moreover, with respect to the evaluation of the value of each patent, the input ranking of evaluation conducted by one's own company and evaluation conducted by other companies is evaluated as the contribution.

Further, Japanese Patent Publication No. 2002-502529 of Translation of PCT Application describes a method for processing data, including the steps of maintaining at least one first patent database, maintaining at least one second non-patent information database of interest to a corporate entity, and maintaining one or more groups, wherein each of the one or more groups has an arbitrary number of patents from the at least one first database, and further including a step of automatically processing non-patent information from the at least one second database and one patent of the foregoing one or more groups.

For financial institutions, investors and corporations, it is extremely important to assess the enterprise value of investment destinations and customers. Thus, conventionally, in order to assess such enterprise value, attempts have been made for objectively judging the enterprise value based on management-finance information regarding management, finance or stock prices. Among such attempts, there are methods of screening and ranking the company to be evaluated via multivariate analysis, statistical techniques and data mining methods.

DISCLOSURE OF THE INVENTION

Recently, with the increasing ratio of intangible assets making up the enterprise value, the value of intangible assets now has a great influence on the enterprise value. Nevertheless, generally speaking, an enterprise value is not a book value in a balance sheet represented by total assets = liabilities + stockholders' equity, and is roughly calculated by the total market value + liabilities. Therefore, when complete current value accounting is applied, the amount calculated by the total market value - stockholders' equity will represent the validity of invisible assets (intangible assets) of the enterprise. Nevertheless, there is a drawback in that it is difficult to specifically calculate the value of intangible assets and judge the value according to application.

With the system described in Japanese Patent Laid-Open Publication No. 2000-348015, a model for enterprise evaluation is created by inputting data (dynamic data) with a short renewal period such as stock prices in addition to data (static data) with a long renewal period such as financial data to be publicly announced at the end of the fiscal term. The static data and dynamic data related to the evaluation target are applied to this model. Thereby, the evaluation of the item to be evaluated, which could change over time, is calculated in a timely manner and as the latest information. Nevertheless, there is a drawback in that it is not possible to judge the profitability of the enterprise per patent application, the attitude of the enterprise to research and development and its trend.

Moreover, the intellectual property evaluation device described in Japanese Patent Laid-Open Publication No. 2001-76042 is to evaluate the intellectual property such as patents one by one each year, and there is a drawback in that it is not possible to judge the value of a specified enterprise.

With the method for processing data described in Japanese Patent Publication No. 2002-502529 of Translation of PCT Application, there is a database containing patent information data and non-patent information data (finance information, R&D information, configuration table of manufactured products, R&D expenses of manufactured products, royalty income from patents of manufactured products, information of competitors and so on of the enterprise), a network is connected with the user, the user inputs information that he/she wants and such information is subject to computer processing and provided to the user, whereby the user is able to make an evaluation. Further, in addition to searching patents relating to products manufactured by the enterprise, R&D expenses relating to such patents and the royalty income thereof are calculated and processed. Nevertheless, there is no materiality in the subject matter of the calculation processing other than (R&D)/(number of patents), and there is a problem in that it is also difficult to implement regarding the other indexes. Moreover, there is a drawback in that it is not possible to evaluate enterprises by tabulating all patents owned by an enterprise, not specific patents, and then combining this information and finance information.

The total market value is determined by the stock prices in the market. Thus, whether the current stock price and the value of intangible assets calculated based on the stockholders' equity in the book are valid is an extremely important element for investors in the decision-making of stock trading. Enterprises are hoping to increase their value of intangible assets and thereby increase their enterprise value by procuring funds and continuing technical developments. Therefore, increasing the value of intangible assets will be positioned as an important issue in the management strategy for enterprises.

There have been attempts of trying to evaluate intangible assets from the past. Nevertheless, there is a drawback in that it is not possible to evaluate the enterprise value validity by quantitatively and qualitatively incorporating the value of intangible assets. Further, when making an investment in a specified enterprise or jointly developing a product with a specified enterprise, or desiring to be employed in a specified enterprise, there is a drawback in that it is difficult to know the trend of such enterprise in each technical field or to predict the potential of such enterprise.

Thus, in light of the foregoing conventional circumstances, an object of the present invention is to provide an enterprise evaluation device and enterprise evaluation program capable of calculating and outputting an index showing how much profit was gained per patent (or utility model) among the total number of effective patents (or effective utility models) by acquiring the profit of a specified enterprise and the number of patents or utility models of such specified enterprise.

Further, another object of the present invention is to provide an enterprise evaluation device and enterprise evaluation program capable of generating and displaying display data for judging the attitude of a specified enterprise to research and development based on the profitability per effective patent and on the size of investments made in research and development activities.

The enterprise evaluation device according to the present invention comprises:

management-finance information acquisition means for acquiring gross operating profit and patent royalty income in a first specified period of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from the acquired registration gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

patent profitability calculation means for calculating patent profitability through dividing the sum of the acquired gross operating profit and patent royalty income by the total number of effective patents; and

output means for outputting the calculated patent profitability to display means or the like.

Further, the enterprise evaluation device according to the present invention comprises:

management-finance information acquisition means for acquiring excess value added amount and patent royalty income in a first specified period of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess value added amount and patent royalty income by said total number of effective patents; and

output means for outputting said calculated patent profitability to display means or the like.

Further, the enterprise evaluation device according to the present invention comprises:

management-finance information acquisition means for acquiring excess gross operating profit and patent royalty income, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess gross operating profit and patent royalty income by said total number of effective patents; and

output means for outputting said calculated patent profitability to display means or the like.

Further, the enterprise evaluation device according to the present invention comprises:

management-finance information acquisition means for acquiring excess earnings on intellectual asset, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing said acquired excess earnings on intellectual asset by said total number of effective patents; and

output means for outputting said calculated patent profitability to display means or the like.

Further, the enterprise evaluation device according to the present invention comprises:

management-finance information acquisition means for acquiring gross operating profit, excess value added amount, excess gross operating profit, excess earnings on intellectual asset or patent royalty income, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating index of patent profitability $\alpha$ obtained through dividing the sum of said acquired gross operating profit and patent royalty income by said total number of effective patents, index of patent profitability $\beta$ obtained through dividing the sum of said acquired excess value added amount and patent royalty income by said total number of effective patents, index of patent profitability $\gamma$ obtained through dividing the sum of said acquired excess gross operating profit and patent royalty income by said total number of effective patents, or index of patent profitability $\delta$ obtained through dividing said acquired excess earnings on intellectual asset by said total number of effective patents for a plurality of enterprises;

display data generation means for generating display data for displaying, index by index and enterprise by enterprise, the calculated patent profitability index of said plurality of enterprises; and

output means for outputting said display data to display means or the like.

Further, the enterprise evaluation device according to the present invention comprises:

management-finance information acquisition means for acquiring gross operating profit, patent royalty income and market value added, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-ext-inguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired gross operating profit and patent royalty income by said total number of effective patents;

display data generation means for generating display data for associating and displaying said calculated patent profitability and said acquired market value added; and

output means for outputting said display data to display means or the like.

Further, the enterprise evaluation device according to the present invention comprises:

management-finance information acquisition means for acquiring excess value added amount, patent royalty income and market value added, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess value added amount and patent royalty income by said total number of effective patents;

display data generation means for generating display data for associating and displaying said calculated patent profitability and said acquired market value added; and

output means for outputting said display data to display means or the like.

Further, the enterprise evaluation device according to the present invention comprises:

management-finance information acquisition means for acquiring excess gross operating profit, patent royalty income and market value added, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess gross operating profit and patent royalty income by said total number of effective patents;

display data generation means for generating display data for associating and displaying said calculated patent profitability and said acquired market value added; and

output means for outputting said display data to display means or the like.

Further, the enterprise evaluation device according to the present invention comprises:

management-finance information acquisition means for acquiring excess earnings on intellectual asset and market value added, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing said acquired excess earnings on intellectual asset by said total number of effective patents;

display data generation means for generating display data for associating and displaying said calculated patent profitability and said acquired market value added; and

output means for outputting said display data to display means or the like.

Further, the enterprise evaluation device according to the present invention comprises:

management-finance information acquisition means for acquiring R&D cost in a first specified period and gross operating profit, patent royalty income and total assets in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired gross operating profit and patent royalty income by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means or the like.

Further, the enterprise evaluation device according to the present invention comprises:

management-finance information acquisition means for acquiring R&D cost in a first specified period and excess value added amount, patent royalty income and total assets in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess value added amount and patent royalty income by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means or the like.

Further, the enterprise evaluation device according to the present invention comprises:

management-finance information acquisition means for acquiring R&D cost in a first specified period and excess gross operating profit, patent royalty income and total assets in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess gross operating profit and patent royalty income by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means or the like.

Further, the enterprise evaluation device according to the present invention comprises:

management-finance information acquisition means for acquiring R&D cost in a first specified period and excess earnings on intellectual asset and total assets in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing said acquired excess earnings on intellectual asset by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means or the like.

BRIEF DESCRIPTION OF THE DRAWINGS

FIG. 1 is a diagram showing the overall configuration of an enterprise evaluation system;

FIG. 2 is a signal processing system block diagram of an enterprise evaluation device;

FIG. 3 is a diagram showing an example of management-finance information;

FIGs. 4A and 4B are diagrams showing an example of technical information;

FIG. 5 is a chart illustrating the respective indexes of "business, profit, and market value" calculated by the enterprise evaluation device and the calculating formula thereof;

FIG. 6 is a chart illustrating the respective indexes of "business, profit, and market value" calculated by the enterprise evaluation device and the calculating formula thereof;

FIG. 7 is a chart illustrating the respective indexes of "R&D, patent" calculated by the enterprise evaluation device and the calculating formula thereof;

FIG. 8 is a chart illustrating the respective indexes of "R&D, patent" calculated by the enterprise evaluation device and the calculating formula thereof;

FIG. 9 is a chart illustrating the respective indexes of "patent portfolio" calculated by the enterprise evaluation device and the calculating formula thereof;

FIG. 10 is a diagram showing a display example of patent profitabilities $\alpha$, $\beta$, $\gamma$ and $\delta$ calculated regarding the 13 companies in the chemical industry;

FIG. 11 is a diagram associating and representing the calculated patent profitability $\alpha$ and market value added (MVA) regarding the 13 companies in the chemical industry;

FIG. 12 is a diagram associating and representing the calculated patent profitability $\beta$ and market value added (MVA) regarding the 13 companies in the chemical industry;

FIG. 13 is a diagram associating and representing the calculated patent profitability $\gamma$ and market value added (MVA) regarding the 13 companies in the chemical industry;

FIG. 14 is a diagram associating and representing the calculated patent profitability $\delta$ and market value added (MVA) regarding the 13 companies in the chemical industry;

FIG. 15 is a diagram associating and representing the calculated patent profitability $\alpha$ and R&D cost ratio $\delta$ regarding the 13 companies in the chemical industry;

FIG. 16 is a diagram associating and representing the calculated patent profitability $\alpha$ and R&D cost ratio $\delta$ regarding the 11 companies in the electrical equipment industry;

FIG. 17 is a diagram associating and representing the calculated patent profitability $\beta$ and R&D cost ratio $\delta$ regarding the 13 companies in the chemical industry;

FIG. 18 is a diagram associating and representing the calculated patent profitability $\beta$ and R&D cost ratio $\delta$ regarding the 11 companies in the electrical equipment industry;

FIG. 19 is a processing flowchart upon calculating and outputting the respective indexes;

FIG. 20 is a diagram showing a display example of an enterprise value evaluation input condition setting screen for selecting the conditions of the target industry or respective enterprises upon calculating the index for determining the enterprise value;

FIG. 21 is a diagram showing a display example of selecting the item of "(PE) patent profitability index" from the enterprise value evaluation menu for selecting the type of index for evaluating the enterprise value;

FIG. 22 is a diagram showing a display example of selecting the item of "(R) research and development index" from the enterprise value evaluation menu for selecting the type of index for evaluating the enterprise value;

FIG. 23 is a diagram showing a display example displaying, in a pulldown menu format, the respective indexes existing at the lower level of the "(R) research and development index"; and

FIG. 24 is a diagram showing an output condition setting screen of the calculated index.

BEST MODE FOR GARRYING OUT THE INVENTION

Embodiments of the present invention are now explained with reference to the drawings.

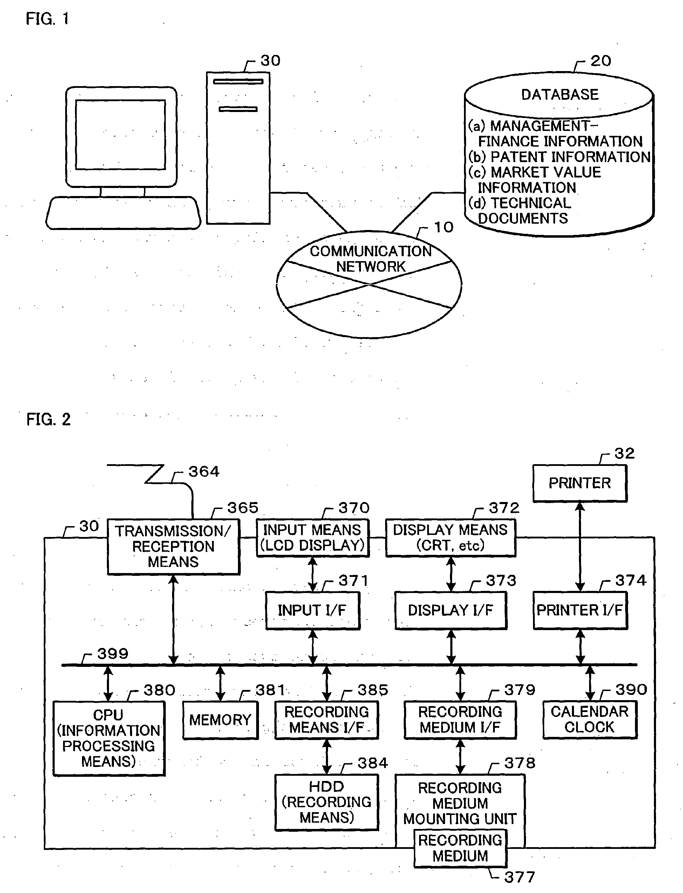

FIG. 1 is a diagram showing the overall configuration of an enterprise evaluation system according to the present invention.

As shown in FIG. 1, the enterprise value evaluation system is configured from a database 20 recording various types of information such as management-finance information, technical documents (in addition to patent information, information relating to utility models and technical journals, etc.), market value information (numerical value information of the market value), threshold for determining the validity of the enterprise value, determination result of the validity and category based on such threshold; an enterprise evaluation device 30 for inputting various types of information such as management-finance information, technical documents and market value information and outputting the judgment results of the validity of the enterprise value; and a communication network 10 such as the Internet or dedicated communication line for communicably connecting the enterprise evaluation device 30 and database 20.

Incidentally, the database 20 may be provided inside the enterprise evaluation device 30.

FIG. 2 is a signal processing system block diagram of an enterprise evaluation device 30 according to the present invention.

As shown in FIG. 2, the information transmission-reception unit of the enterprise evaluation device 30 is provided with a transmission-reception means 365 (including the functions of a management-finance information acquisition means, gazette acquisition means or output means) for transmitting and receiving information to and from another telecommunications device via the communication network 364 such as a public line or telecommunications network.

Further, the enterprise evaluation device 30 is also provided with an input interface 371 for acquiring various types of information input by the user via the input means 370 and transmitting this to the information processing means described later, and outputting display commands to an LCD or the like based on instructions from the information processing means, a display means 372 for displaying information such as images or texts; graphs or charts, a display interface 373 (including the function of an output means) for outputting image signals for display to the display means 372 based on the command from the information processing means, and a printer interface 374 for outputting information such as images or texts, graphs or charts to a printer 32 or the like. Incidentally, the input means 370 includes input devices such as a keyboard, mouse, tablet and the like.

Further, the enterprise evaluation device 30 is also provided with a recording medium mounting unit 378 for detachably mounting a recording medium 377, and a recording medium interface 379 (including the functions of a management-finance information acquisition means, gazette acquisition means or output means) for recording and reading various types of information in and from the recording medium 377. Incidentally, the recording medium 377 is a detachable recording medium in a magnetic recording format or optical recording format as represented by semiconductors such as a memory card, MO, magnetic disk and so on.

Moreover, the enterprise evaluation device 30 is also provided with an information processing means 380 for controlling the overall enterprise evaluation device 30, and a memory 381 configured from a ROM recording programs to be executed by the information processing means 380 and various constants, and a RAM which is a recording means to become the working area upon the information processing means 380 executing processing.

Further, the information processing means 380 is able to realize the various functions of a management-finance information acquisition means, gazette acquisition means, number-of-inventions acquisition means, number-of-extinguished-inventions acquisition means, total number-of-effective-patents calculation means, patent profitability calculation means, R&D cost ratio calculation means, expected intellectual property profit calculation means, display data generation means and output means. Incidentally, instead of the information processing means 380 performing all of the processing to be performed by the foregoing means, a plurality of dedicated processing devices may be provided so that the respective processing devices can share and execute such processing in order to achieve the objects of the present invention.

Moreover, the enterprise evaluation device 30 is also provided with a recording means 384 such as a hard disk recording various types of information; for example, various constants relating to the processing of the enterprise evaluation device 30, attribute information upon communicably connecting to a telecommunications device on a network, connection information such as a URL (Uniform Resource Locators), gateway information, DNS (Domain Name System), management-finance information relating to the management of the enterprise, technical documents relating to patents, patent information, market value information, threshold for determining the enterprise value and determination results of validity based on such threshold; recording means interface 385 (including the functions of a management-finance information acquisition means, gazette acquisition means or output means) for reading information recorded in the recording means 384 and writing information into the recording means 384; and a calendar clock 390 for clocking the time.

The respective peripheral circuits of the information processing means 380, display interface 373, memory 381, recording means interface 385 and calendar clock 390 in the enterprise evaluation device 30 are connected to a bus 399, and the respective peripheral circuits can be controlled based on the processing program to be executed by the information processing means 380.

Incidentally, various databases of the management-finance information, technical documents and market value information may be stored in the recording means 384, provided by the storage medium 377 such as a CD-ROM, CD-RW, DVD or MO, or acquired from another telecommunications device (database 20 or the like) via the communication network 364.

Further, the enterprise evaluation device 30 can be realized by using various types of computers such as a personal computer or workstation. Moreover, computers may be connected via a network to share and implement the functions.

The management-finance information acquisition means of the transmission-reception means 365, recording means interface 385, recording medium interface 379 and information processing means 380 is capable of acquiring, from a management-finance information database (database 20, recording means 384, recording medium 377 or the like) recording management-finance information such as finance information of enterprises, the gross operating profit, operating profit, R&D cost, sales profit, R&D cost included in the manufacturing cost, administrative expenses, R&D cost included in the administrative expenses, excess value added amount, sales volume, ratio of value added amount to sales volume, average ratio of value added amount to sales volume, value added amount, excess gross operating profit, ratio of gross operating profit, average ratio of gross operating profit, sales volume gross operating profit, ratio of gross operating profit to sales volume, excess earnings on intellectual asset, total assets, return on intellectual asset, average return on intellectual asset, market value added or patent royalty income in a specified period of a specified enterprise.

Further, the gazette acquisition means of the transmission-reception means 365, recording means interface 385, recording medium interface 379 and information processing means 380 is capable of acquiring registration gazettes based on patent applications or utility model applications filed by a specified enterprise in a specified period from a patent information database (database 20, recording means 384, recording medium 377 or the like).

Moreover, the number-of-inventions acquisition means of the information processing means 380 and the like is capable of acquiring the number of patents subjected to, before a predetermined time, registration or number of claims of the patents as the number of inventions from the acquired registration gazettes.

Further, the number-of-extinguished-inventions acquisition means of the information processing means 380 and the like is capable of acquiring the number of extinguished inventions of patents extinguished before the predetermined time among the acquired number of inventions.

Moreover, the total number-of-effective-patents calculation means of the information processing means 380 and the like is capable of calculating the total number of effective patents by subtracting the number of extinguished inventions from the acquired number of inventions.

Further, the patent profitability calculation means of the information processing means 380 and the like is capable of calculating the patent profitability through dividing the sum of the acquired gross operating profit and patent royalty income by the total number of effective patents.

Moreover, the patent profitability calculation means of the information processing means 380 and the like is capable of calculating the gross operating profit by adding the acquired operating profit and R&D cost in the first specified period, and calculating the patent profitability through dividing the sum of the calculated gross operating profit and patent royalty income by the total number of effective patents.

Further, the patent profitability calculation means of the information processing means 380 and the like is capable of calculating the gross operating profit by subtracting the administrative expenses from the sum of acquired sales profit, R&D cost included in the manufacturing cost, administrative expenses, and R&D cost included in the administrative expenses in the first specified period, and calculating the patent profitability through dividing the sum of the calculated gross operating profit and patent royalty income by the total number of effective patents.

Moreover, the patent profitability calculation means of the information processing means 380 and the like is capable of calculating the patent profitability through dividing the sum of the acquired excess value added amount and patent royalty income by the total number of effective patents.

Further, the patent profitability calculation means of the information processing means 380 and the like is capable of calculating the excess value added amount by multiplying the sales volume to a value obtained by subtracting the average ratio of value added amount to sales volume from the acquired ratio of value added amount to sales volume, and calculating the patent profitability through dividing the sum of the calculated excess value added amount and patent royalty income by the total number of effective patents

Moreover, the ratio of value added amount to sales volume calculation means of the information processing means 380 and the like is capable of calculating the ratio of value added amount to sales volume through dividing the value added amount by the sales volume of the specified enterprise, and calculating the average ratio of value added amount to sales volume for a plurality of enterprises.

Further, the patent profitability calculation means of the information processing means 380 and the like is capable of calculating the patent profitability through dividing the sum of the acquired excess gross operating profit and patent royalty income by the total number of effective patents.

Moreover, the patent profitability calculation means of the information processing means 380 and the like is capable of calculating the excess gross operating profit by multiplying the sales volume to a value obtained by subtracting the average ratio of gross operating profit from the acquired ratio of gross operating profit, and calculating the patent profitability through dividing the sum of the calculated excess gross operating profit and patent royalty income by the total number of effective patents.

Further, the ratio of gross operating profit to sales volume calculation means of the information processing means 380 and the like is capable of calculating the ratio of gross operating profit to sales volume of the specified enterprise through dividing the acquired gross operating profit of the specified enterprise by the sales volume of the specified enterprise, and calculating the average ratio of gross operating profit to sales volume regarding the plurality of enterprises. The plurality of enterprises to be averaged here may be per industry such as the chemical industry or electrical equipment industry, or may be classified per technical field of enterprises, per business division of enterprises, per IPC or per section.

Moreover, the patent profitability calculation means of the information processing means 380 and the like is capable of calculating the excess gross operating profit by multiplying the sales volume to a value obtained by subtracting the average ratio of gross operating profit to sales volume from the ratio of gross operating profit to sales volume of the specified enterprise, and calculating the patent profitability through dividing the sum of the calculated excess gross operating profit and patent royalty income by the total number of effective patents.

Further, the patent profitability calculation means of the information processing means 380 and the like is capable of calculating the patent profitability through dividing the acquired excess earnings on intellectual asset by the total number of effective patents.

Moreover, the patent profitability calculation means of the information processing means 380 and the like is capable of calculating the excess earnings on intellectual asset by multiplying the total assets to a value obtained by subtracting the average return on intellectual asset from the acquired return on intellectual asset, and calculating the patent profitability through dividing the calculated excess earnings on intellectual asset by the total number of effective patents.

Further, the display data generation means of the information processing means 380 and the like is capable of generating display data for displaying the index ratio per index and per enterprise regarding the patent profitability index of the calculated plurality of enterprises.

Moreover, the display data generation means of the information processing means 380 and the like is capable of generating display data for associating and displaying the calculated patent profitability and the acquired market value added.

Further, the R&D cost ratio calculation means of the information processing means 380 and the like is capable of calculating the R&D cost ratio through dividing the acquired R&D cost by the total assets.

Moreover, the display data generation means of the information processing means 380 and the like is capable of generating display data for associating and displaying the calculated patent profitability and the calculated R&D cost ratio.

Further, the output means of the transmission-reception means 365, recording means interface 385, recording medium interface 379, printer interface 374 and information processing means 380 is capable of outputting the patent profitability to a display means, printing means, recording medium, or another telecommunications device via a communication line.

Moreover, the output means of the transmission-reception means 365, recording means interface 385, recording medium interface 379, printer interface 374 and information processing means 380 is capable of outputting display data to a display means, printing means, recording medium, or another telecommunications device via a communication line.

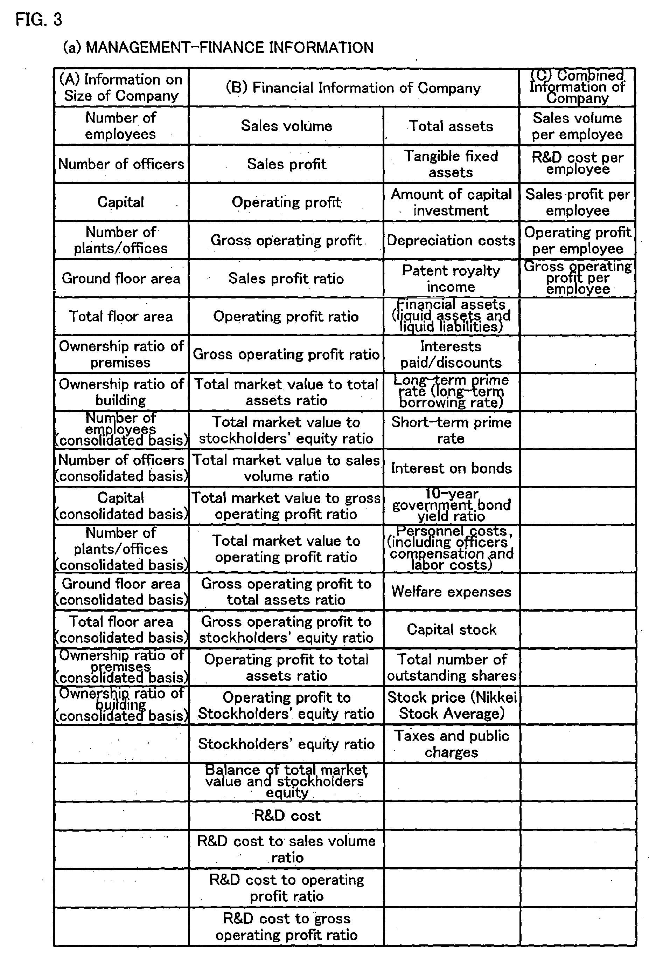

FIG. 3 is a chart representing an example of management-finance information recorded in the recording means of the database 20 or the like.
As shown in FIG. 3, management-finance information includes information showing the size of the company, information showing the financial information of the company, and combined information of the company calculated by combining the various types of information of the company. Incidentally, as the data of management-finance information, the annual security report of the company to be researched, and information acquired from commercial databases provided by newspaper publishers, research institutes and the like may be used.

Information showing the size of the company includes the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

The financial information of the company includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, R&D cost to operating profit ratio or gross operating profit.

Moreover, finance information of the company includes total assets, tangible fixed assets, amount of capital investment, depreciation costs, patent royalty income, financial assets (liquid assets and liquid liabilities), interests paid, discounts, long-term prime rate (long-term borrowing rate), short-term prime rate, interest on bonds, 10-year government bond yield ratio, personnel costs (including officers' compensation and labor costs), welfare expenses, capital stock, total number of outstanding shares, stock price (Nikkei Stock Average) or taxes and public charges.

The combined information of the company includes the sales volume per employee, R&D cost per employee, sales profit per employee, operating profit per employee, gross operating profit per employee and so on.

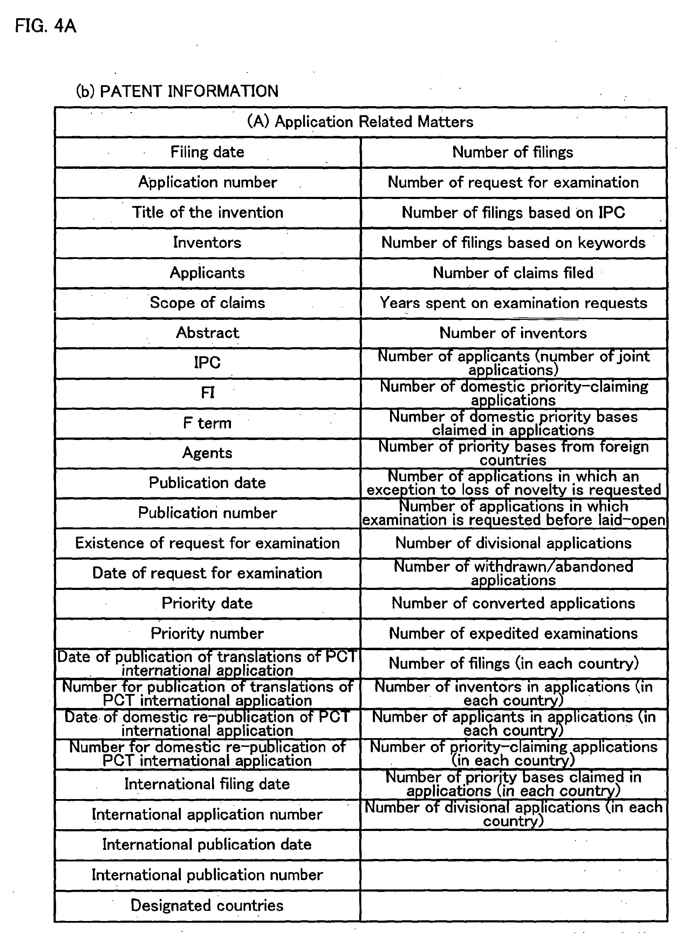

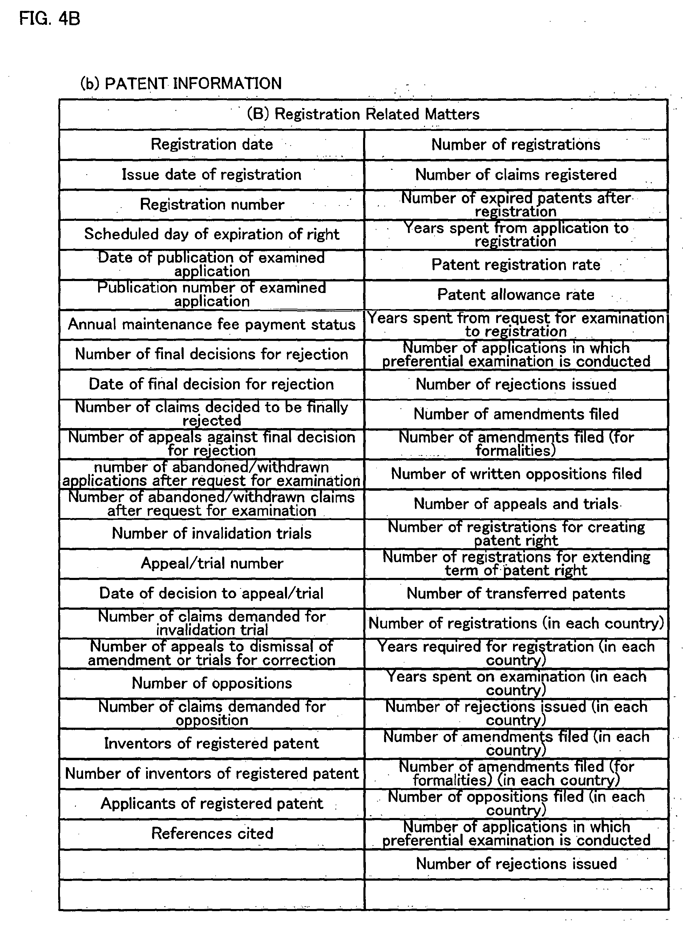

FIGs. 4A and 4B are diagrams showing an example of a technical document recorded in a recording means of the database 20 or the like.

As shown in FIGs. 4A and 4B, technical documents contain patent documents such as filing information and registration information of patents and utility models. As data of technical documents, for instance, the Industrial Property Digital Library database of the Japanese Patent Office, information relating to patents and utility models acquired from CD-ROM gazettes or other technical journals may be used.

Application information of an invention includes, for instance, per enterprise, the following: the filing date, application number, title of the invention, inventors, applicants, scope of claims, abstract, IPC, FI, F Term, agents, publication date, publication number, existence of request for examination, date of request for examination, priority date, priority number, date of publication of translations of PCT international application, number for publication of translations of PCT international application, date of domestic re-publication of PCT international application, number for domestic re-publication of PCT international application, international filing date, international application number, international publication date, international publication number, designated country, number of filings, number of examinations requested, number of filings based on IPC, number of filings based on keywords, number of claims filed, years spent on examination requests, number of inventors, number of applicants (number of joint applications), number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn/abandoned applications, number of converted applications, number of expedited examinations, number of filings in each foreign country, number of inventors in each foreign country, number of applicants in each foreign country, number of priority-claiming applications in each foreign country, number of priority bases claimed in applications in each foreign country or number of divisional applications in each foreign country.

Further, registration information of an invention includes, for example, per enterprise, the following: the registration date, issue date of registration, registration number, scheduled day of expiration of right, date of publication of examined application, publication number of examined application, annual maintenance fee payment status, number of final decisions for rejection, date of final decision for rejection, number of claims decided to be finally rejected, number of appeals against final decision for rejection, number of abandoned/withdrawn applications after request for examination, number of abandoned/withdrawn claims after request for examination, number of invalidation trials, appeal/trial number, date of decision to appeal/trial, number of claims demanded for invalidation trial, number of appeals to dismissals of amendment or trials for correction, number of oppositions, number of claims demanded for opposition, inventors of registered patent, number of inventors of registered patent, applicants of registered patent, references cited, number of registrations, number of claims registered, number of expired patents after registration, years spent from application to registration, patent registration rate, patent allowance rate, years spent from request for examination to registration, number of applications in which preferential examination is conducted, number of rejections issued, number of amendments filed, number of amendments filed for formalities, number of registrations for creating patent right, number of registrations for extending term of patent right, number of transferred patents, number of registrations in each country, years required for registration in each country, years spent on examination in each country, number of rejections issued in each country, number of amendments filed in each country, number of amendments filed for formalities in each country, number of oppositions filed in each country, number of applications in which preferential examination is conducted or number of rejections issued.

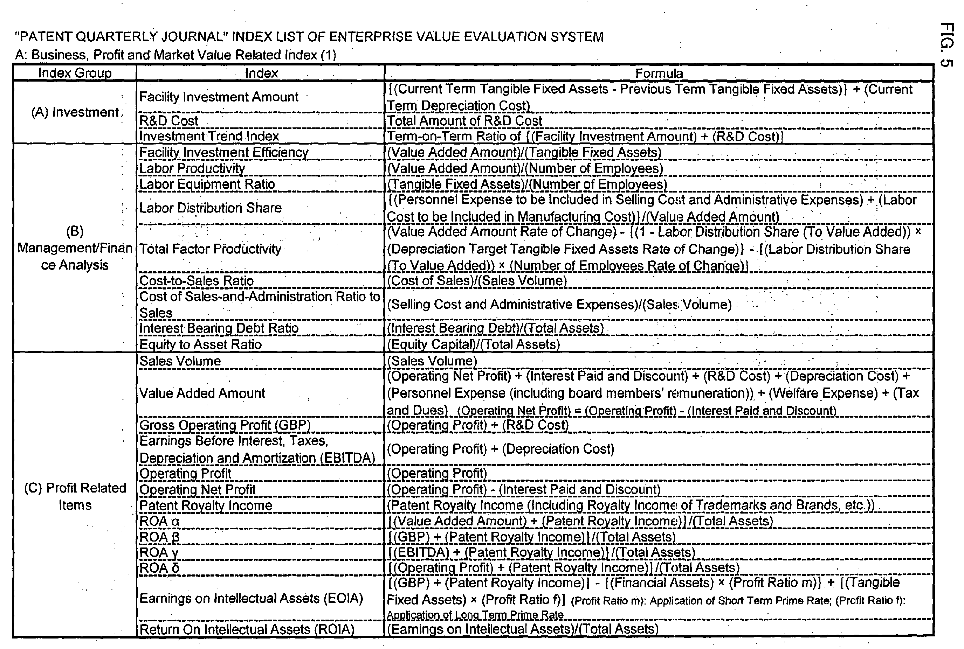

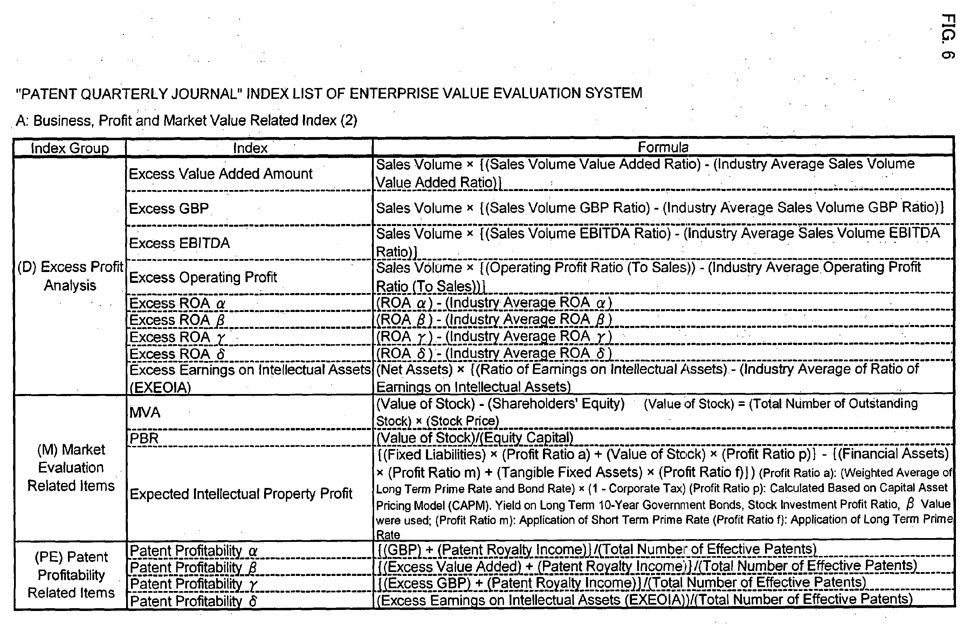

FIG. 5 and FIG. 6 are charts illustrating examples of the respective indexes of "business, profit, and market value" calculated by the enterprise evaluation device pertaining to the present invention and the calculating formula thereof.

As shown in FIG. 5 and FIG. 6, as the index groups, "(A) investment", "(B) management-finance analysis", "(C) profit related", "(D) excess profit analysis", "(M) market value related", and "(PE) patent profitability are provided, and the names and outline of the respective indexes and the calculating formula thereof are indicated in each of these groups.

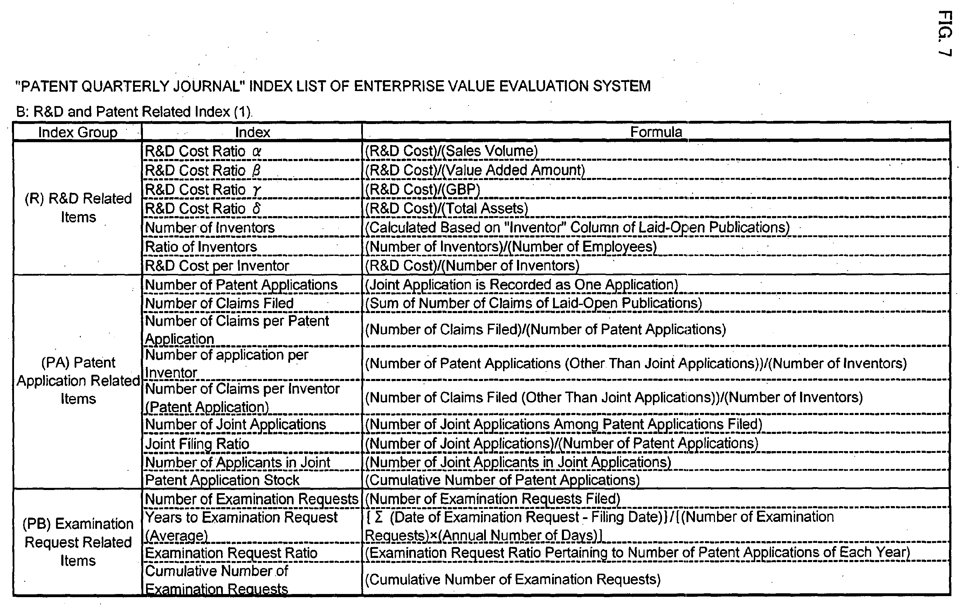

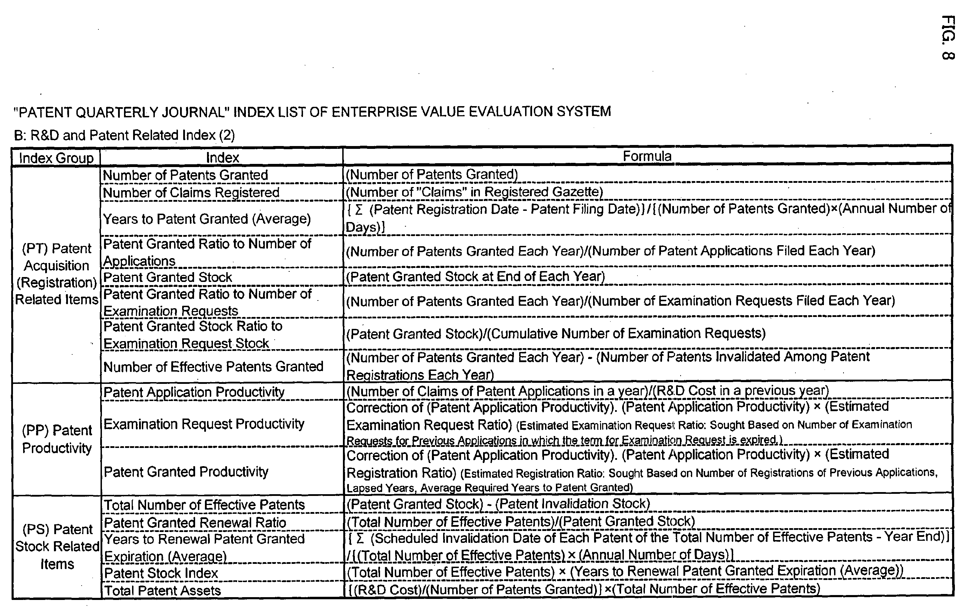

Further, FIG. 7 and FIG. 8 are charts illustrating examples of the index of "R&D, patent" calculated by the enterprise evaluation device pertaining to the present invention.

As shown in FIG. 7 and FIG. 8, as the index groups, "(R) research and development related", "(PA) patent application related", "(PB) examination request related", "(PT) patent acquisition (registration) related", "(PP) patent productivity" and "(PS) patent stock related" are provided, and the names and outline of the respective indexes and the calculating formula thereof are indicated in each of these groups.

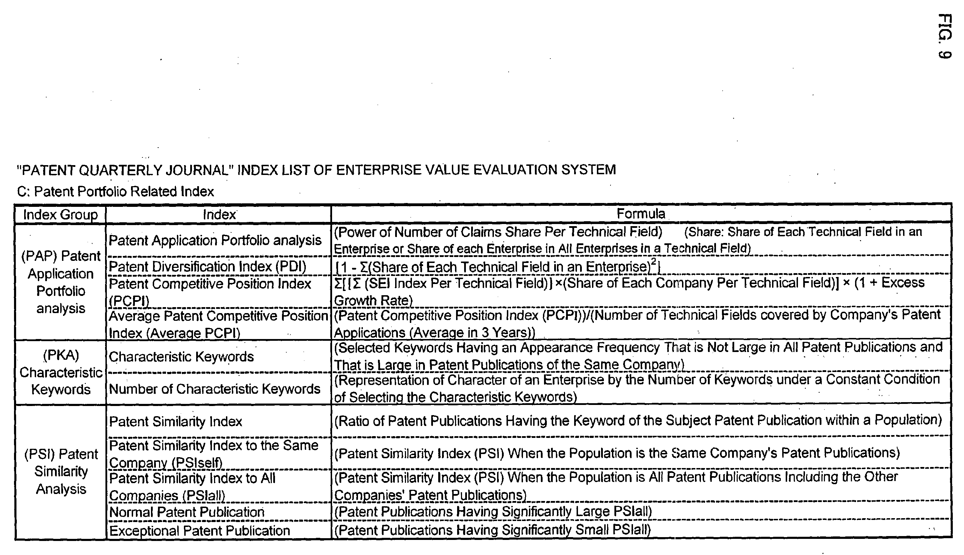

FIG. 9 is a chart illustrating an example of the "patent portfolio" index calculated by the enterprise evaluation device pertaining to the present invention.

As shown in FIG. 9, as the index groups, "(PAP) patent application portfolio analysis", "(PAK) characteristic keywords", and "(PSI) patent similarity ratio analysis" are provided, and the names and outline of the respective indexes and the calculating formula thereof are indicated in each of these groups.

Next, the respective indexes pertaining to the present invention are explained.

In the present invention, among the respective indexes shown in FIG. 6 and FIG. 7, the broad classifications below and the respective indexes included in the lower hierarchy are explained. Further, abbreviation of the respective indexes is defined as "patent profitability index (PE)" and so on.

Business, profit, and market value related: Patent profitability index (PE)

(1-1) Patent profitability $\alpha$
(1-2) Patent profitability $\beta$
(1-3) Patent profitability $\gamma$
(1-4) Patent profitability $\delta$

R&D patent related index: Research and development index (R)

(2-1) R&D cost ratio $\alpha$
(2-2) R&D cost ratio $\beta$
(2-3) R&D cost ratio $\gamma$
(2-4) R&D cost ratio $\delta$

Business, profit, and market value related: Market value related index (M)

(3-1) Market value added (MVA)
(3-2) Price book value ratio (PBR)
(3-3) Expected intellectual property profit (EIPP)

The patent profitability index (PE) is an index for estimating the profitability of a patent or utility model from the amount of profit per owned patent or utility model. The patent profitability index (PE) includes at least one of the indexes among patent profitability $\alpha$, $\beta$, $\gamma$ or $\delta$. The patent profitability index (PE) is an index showing how much profit is being gained per patent (or utility model) among the total number of effective patents (or effective utility models) owned by an enterprise.

(1-1) Patent profitability $\alpha$

With patent profitability $\alpha$, since the "gross operating profit (GBP) + patent royalty income" is disposed as the numerator, and "number of effective patents" is disposed as the denominator, this can be considered as total business profit per effective patent. The calculating formula thereof is shown below (Formula 1).

Patent profitability α

= {(gross operating profit (GBP)) + (patent royalty income)} /

(total number of effective patents (PSTE)) ...(Formula 1)

Provided,

Gross operating profit (GBP)

= {(sales profit) + (R&D cost included in manufacturing cost)}

- {(administrative expenses) - (R&D cost included in administrative expenses)}

= (operating profit) + (R&D cost) ...(Formula 2)

Operating profit

= (sales profit) - (administrative expenses) ...(Formula 3)

R&D cost

= (R&D cost included in manufacturing cost) + (R&D cost included in administrative expenses) ...(Formula 4)

Total number of effective patents (PSTE)

= (total number of patent registrations among patents filed by a specified enterprise within a specified period) - (total number of extinguished patents that extinguished by a predetermined time among the patent registrations filed by a

specified enterprise within a specified period) ...(Formula 5)

"Specified period" shows a period such as from January 1, 1994 to December 31, 1996.
"Predetermined time" shows the time of tabulation such as the last day of the year 1999, the last day of the year 2000 or the last day of the year 2001.

As shown in (Formula 1) above, patent profitability $\alpha$ is sought through dividing the total amount of gross operating profit (GBP) and patent royalty income (total business profit generated by an enterprise each year) by the total number of effective patents. Therefore, the patent profitability $\alpha$ index shows the total business profit per effective patent.

In this embodiment, upon calculating patent profitability $\alpha$, the patent applications filed in 1994 onward up to a predetermined time when publications and registrations are available in the Japanese Patent Office's CD-ROM gazettes were counted regarding the patents subject to registration. If the data of patent publications and registrations can be obtained, these may be counted from an older year. Further, this is not limited to 1994 onward, and the respective indexes may be calculated by counting the data from a new year such as 2000 onward.

The total number of effective patents (PSTE) used in calculating patent profitability $\alpha$ is now explained briefly.

Total number of effective patents (PSTE), as shown in (Formula 5) above, is an index for showing the total number of patent registrations obtained by subtracting the total number of patents or utility model registrations that extinguished due to reasons such as term expiration from the total number of patents or utility models (cumulative number of patent registrations (PTSP)) subjected to registration before a predetermined time among the patent applications or utility model applications filed by a specified enterprise within a specified period. Therefore, the total number of effective patents (PSTE) represents the total number of registered patents or registered utility models based on patent applications or utility model applications filed within a specified period that are still existing at a predetermined time such as each year end.

Value of the calculated total number of effective patents (PSTE) may be considered to show the technical strength of an enterprise with respect to patents. Therefore, generally speaking, an enterprise having a large total number of effective patents (PSTE) value is considered to have superior patent or technical strength.

Incidentally, in recent years, for the purpose of reducing patent administrative expenses, many enterprises are abandoning patents which are considered to be strategically insignificant, or rationalizing their strategy by carefully examining the subject matter of applications and thereby narrowing down the cased to be newly filed. Thus, it is necessary to keep in mind that the increase or decrease in the total number of effective patents (PSTE) does not necessarily directly represent the increase or decrease in the value of the overall patent stock.

Next, the gross operating profit (GBP) used in calculating patent profitability $\alpha$ is explained briefly.

The gross operating profit (GBP) disposed as the numerator in (Formula 1) above is the amount of profit shown in (Formula 2) above. (Formula 3) and (Formula 4) above also represent the relationship of the profit index upon calculating the gross operating profit (GBP).

Pursuant to the revision of the accounting standards, as a general rule in Japan, R&D cost must be recorded entirely as expenses in the settlement of accounts after the term ending March 2000. Conventionally, there were numerous companies that did not disclose the breakdown of the R&D cost included in the manufacturing costs and general administrative expenses. Nevertheless, after the enforcement of these regulations, the amount of R&D cost pertaining to the calculation of profits and losses became clear. Thereupon, for the purpose of multilaterally analyzing the actual status of such R&D cost of the company, index referred to as the "gross operating profit (GBP)" has been developed.

This is an estimate of hypothetical profits (gross profit generated from the main business excluding research and development activities; that is, the manufacture and sale activities) sought by adding the R&D cost to the operating profit.

As a result of the R&D cost being entirely recorded as expenses, upon calculating profits and losses, the more research and development activities are positively engaged, the more operating profit will be compressed. Thus, while the importance of technology development (intellectual property) is being discussed, there is a problem in that it is difficult to grasp the actual condition of the profitability of the company only from the perspective of operating profit. The foregoing estimate is considered to provide a perspective to this problem.

This gross operating profit (GBP) is an index that is positioned roughly between the sales profit and operating profit. By using the gross operating profit simultaneously with the sales profit and operating profit, it will be possible to grasp the profitability of the enterprise from many angles. Incideritally, the sales profit is the gross margin sought by subtracting the inanufacturing cost from the sales volume. Nevertheless, some R&D cost are included in manufacturing costs, whereas others are included in general administrative expenses. Thus, strictly speaking, the gross operating profit cannot be called a profit index positioned between the sales profit and operating profit.

(1-2) Patent profitability β

Patent profitability β is an index sought through dividing the total amount of "excess value added amount", which represents the portions exceeding the industry average among the total amount of value created in the respective enterprises, and "patent royalty income" by the "total number of effective patents (PSTE)". Patent profitability β represents the excess value added amount per effective patent. The calculating formula thereof is shown below (Formula 6).

```
Patent profitability β

= {(excess value added amount) + (patent royalty income)} /

(total number of effective patents (PSTE)) …(Formula 6)
```

Provided,

```
Excess value added amount

= (sales volume) × {(ratio of value added amount to sales

volume) - (business category average ratio of value added amount to sales volume)} …(Formula 7)
```

```
Ratio of value added amount to sales volume

= (value added amount) / (sales volume) …(Formula 8)
```

Whereas the index of foregoing patent profitability α is a "patent profitability" calculated by using the overall profits (total business profit), patent profitability β is a "patent profitability" calculated by using only the portion exceeding the industry average among the generated added values (excess value added amount) and the patent royalty income. Therefore, this can be used to compare the patent profitability in the same business category.

Here, "value added amount" is the value added amount generated by a specified enterprise in a specified period and is used for measuring the value created by internal production factors (personnel, articles, money) among the sales volume. Since the value added amount distributed to the internal production factors is the same meaning as the total value generated before the distribution, this shows the total amount of value created by a specified enterprise in a specified period. Not only does the value added amount represent the results after distribution to the respective factors such as the operating profit and current profit, it is also able to capture the total value created before the distribution, and, therefore, this is useful in analyzing the profitability of a specified enterprise. The calculation example of a value added amount is shown below (Formula 9).

```
Value added amount

= (net operating profit) + (interest paid/discount) + (R&D cost) + (depreciation cost) + (personnel cost (including compensation for directors) + (welfare expense) + (tax and

public charges) ...(Formula 9)
```

```
Since (net operating profit) = (operating profit) - (interest paid/discount), the above (net operating profit) + (interest paid/discount) is equal to an (operating profit).
```

(1-3) Patent profitability $\gamma$

With patent profitability $\gamma$, the sum of "excess GBP" representing the portion exceeding the industry average among the business income obtained by the respective enterprises through manufacture/sale activities and "patent royalty income" is disposed as the numerator, and the "total number of effective patents" is disposed as the denominator. Thus, patent profitability $\gamma$ can be considered to show the excess total business profit amount per effective patent. The calculating formula thereof is shown below (Formula 10).

```
Patent profitability γ

= {(excess GBP) + (patent royalty income)} / (total number of

effective patents) ...(Formula 10)
```

Provided,

Excess GBP

= (sales volume) × {(ratio of GBP to sales volume) - (business category average ratio of GBP to sales volume)} ...(Formula 11)


Ratio of GBP to sales volume

= (gross operating profit (GBP)) / (sales volume) ...(Formula

12)

Whereas the index of foregoing patent profitability $\alpha$ is a "patent profitability" calculated by using the overall profits (total business profit), patent profitability $\gamma$ is a "patent profitability" calculated by using only the "excess GBP" which is the portion exceeding the industry average among the gross operating profit (GBP) and the "patent royalty income". Therefore, patent profitability $\gamma$ can be used to compare the patent profitability in the same business category as with patent profitability $\beta$.

As a result of using the excess gross operating profit (excess GBP) shown in (Formula 11) above, it will be possible to make an appropriate comparison with other companies in the same business category, and it will be easy to judge whether the enterprise to be researched is superior or inferior in comparison to the industry average.

(1-4) Patent profitability $\delta$

Patent profitability $\delta$ is an index sought through dividing the "excess earnings on intellectual asset (EXEOIA)" representing the portion exceeding the industry average among the amount of profit estimated to be generated in the respective enterprises based on off-balance intellectual assets (intangible assets not indicated in a balance sheet) by the total number of effective patents, and can be considered to be the amount of excess earnings on intellectual asset per effective patent. The calculating formula thereof is shown below (Formula 13).


Patent profitability $\delta$

= (excess earnings on intellectual asset (EXEOIA)) / (total number of effective patents) ...(Formula 13)


Provided,

Excess earnings on intellectual asset (EXEOIA)

= (total assets) × {(return on intellectual asset) - (business category average return on intellectual asset)} ...(Formula

14.1)

Patent profitability $\delta$ is an index obtained through dividing the portion exceeding the industry average value of the "earnings on intellectual asset" which is the balance after deducting the expected return to be obtained from on-balance assets (assets indicated in the balance sheet) from the total business profit by the total number of effective patents. Using this patent profitability 5 is an effective method for estimating the "quality" of patents based on a macro approach using accounting information.

The foregoing excess earnings on intellectual asset (EXcess Earnings On Intellectual Asset) is an index included in (D) excess profit analysis shown in FIG. 6, and is an index obtained by multiplying the total assets to the balance obtained by subtracting the industry average amount of return on intellectual asset from the return on intellectual asset of a specified enterprise in a specified period.

The excess earnings on intellectual asset (EXEOIA) is an index indicating the portion exceeding the industry average among the amount of profit of a specified enterprise estimated to be generated based on off-balance intellectual assets (intangible assets not indicated in the balance sheet).

Next, the return on intellectual asset (ROIA) shown in (Formula 14.1) above is explained.

The return on intellectual asset is an index included in (C) profit related shown in FIG. 5, and is an index showing ratio of the "earnings on intellectual asset (EOIA)" to "total assets". The calculating formula thereof is shown below (Formula 14.2).

$$\text{Return on intellectual asset (ROIA)}$$
$$= (\text{earnings on intellectual asset (EOIA)}) \ / \ (\text{total assets})$$
$$\dots(\text{Formula 14.2})$$

As shown in (Formula 14.2) above, upon calculating the return on intellectual asset (ROIA), for instance, the management-finance information acquisition means acquires the total assets, gross operating profit, patent royalty income, financial assets, return on financial assets, tangible fixed assets and return on tangible fixed assets of a specified enterprise from the management-finance database. Then, the earnings on intellectual asset calculation means of the information processing means 380 and the like calculates the earnings on intellectual asset by subtracting the value obtained by multiplying the return on financial assets to the financial assets and the value obtained by multiplying the return on tangible assets to the tangible fixed assets from the sum of the acquired gross operating profit and patent royalty income. Further, the return on intellectual asset calculation means of the information processing means 380 and the like calculates the return on intellectual asset through dividing the earnings on intellectual asset by the total assets.

The earnings on intellectual asset indicated in (Formula 14.2) above is an index included in (C) profit related shown in FIG. 5, and is an index showing the amount of profit obtained by deducting the interest of financial assets and the interest of tangible assets that do not appear directly in the balance sheet from the so-called total business profit which is the sum of the gross operating profit (GBP) and the patent royalty income recorded as nonoperating profit. The calculating formula thereof is shown below (Formula 14.3).

$$\text{Earnings on intellectual asset (EOIA)}$$
$$= \{(\text{gross operating profit (GBP)}) + (\text{patent royalty income})\} -$$
$$\{(\text{financial assets}) \times (\text{profit ratio m}) + (\text{tangible fixed}$$
$$\text{assets}) \times (\text{profit ratio f})\} \dots(\text{Formula 14.3})$$

Provided,

Gross operating profit (GBP): Refer to (Formula 2) to (Formula 4)
Financial assets: Term beginning and term end average of financial assets on the balance sheet (= (liquid assets) - (liquid liabilities))
Tangible fixed assets: Term beginning and term end average of tangible fixed assets on balance sheet
Profit ratio m: Return on financial assets (short-term prime rate may be applied)
Profit ratio f: Return on tangible fixed assets (long-term prime rate may be applied)

## EP 1 686 514 A1

Since financial assets are acquired with relatively short-term loans, a short-term prime rate may be used in the profit ratio m. Further, since fixed assets are acquired with relatively long-term loans, a long-term prime rate value may be used in the profit ratio f. With respect to profit ratio m and profit ratio f, it is necessary to use a value according to the analytical purpose on a case-by-case basis. Moreover, the interest rate such as a long-term floating interest can also be freely selected for analysis.

As shown in (Formula 14.3) above, upon calculating the earnings on intellectual asset (EOIA), for instance, the management-finance information acquisition means acquires the gross operating profit, patent royalty income, financial assets, return on financial assets, tangible fixed assets and return on tangible fixed assets of a specified enterprise from the management-finance database. Then, the earnings on intellectual asset calculation means of the information processing means 380 and the like calculates the earnings on intellectual asset by subtracting the value obtained by multiplying the return on financial assets to the financial assets and the value obtained by multiplying the return on tangible assets to the tangible fixed assets from the sum of the acquired gross operating profit and patent royalty income.

Further, as shown in (Formula 2) to (Formula 4), the earnings on intellectual asset may be calculated using the operating profit and R&D cost, and the earnings on intellectual asset may also be calculated using the sales profit, administrative expenses, R&D cost, operating profit, R&D cost included in the manufacturing cost, and R&D cost included in the administrative expenses.

As shown in (Formula 14.3) above, the earnings on intellectual asset (EOIA) can be considered as the balance obtained by deducting the expected return to be obtained from the on-balance assets (assets on the balance sheet) from the total business profit. The earnings on intellectual asset (EOIA) is an index representing the amount of profit estimated to be generated based on off-balance intellectual assets (intangible assets not indicated in the balance sheet) under the assumption that there are profits that cannot be explained from on-balance assets.

The earnings on intellectual asset (EOIA) may differ significantly depending on the size of the enterprise. Therefore, in order to enable the relative comparison of the profitability of the respective enterprises, the ratio of the earnings on intellectual asset (EOIA) to the size of total assets is calculated as the return on intellectual asset (ROIA). As a result of using this ROIA index, without regard to the size of the enterprise, the earnings on intellectual asset to the total assets can be compared under roughly the same conditions.

A part of the (R) research and development related index shown in FIG. 7 is now explained.

(2-1) R&D cost ratio α

The R&D cost ratio α is an index showing the ratio of the "R&D cost" to "sales volume" of a specified enterprise in each specified period, and is a numerical value also referred to as the "R&D cost to sales volume ratio" or "R&D ratio". The calculating formula thereof is shown below (Formula 15).

```
R&D cost ratio α

= (R&D cost) / (sales volume) …(Formula 15)
```

Provided,

R&D cost = R&D cost of a specified enterprise in a first specified period;
Sales volume = sales volume of a specified enterprise in a second specified period;
"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period.

In the foregoing calculation example, on the premise that roughly 2 years are required until the results of research and development are reflected in the sales volume of products, a difference is provided between the investment period of the R&D cost (first specified period) and the period in which the investment was reflected in the sales volume (second specified period) upon calculating the R&D cost ratio α. The technical results obtained from the research and development are likely to contribute to future business results, and not the business results of the current year. Nevertheless, as with a major corporation in which the annual R&D cost undergoes a relatively stable transition, the necessity to separately set a first specified period and a second specified period is small. Further, as with a venture company in which the R&D cost changes year by year, it is desirable to separately set the first specified period and the second specified period.

As shown in (Formula 15) above, upon calculating the R&D cost ratio $\alpha$, the R&D cost made by a specified enterprise in a specified period is divided by the sales volume of the specified enterprise in the specified enterprise.

With the volume of the sales volume which is one element used upon calculating the index of the R&D cost ratio $\alpha$, the production cost and manufacture cost in the sales volume will largely differ depending on the industrial structure of business categories and enterprises. Therefore, the large and small of the value of this R&D cost ratio $\alpha$ does not necessarily show the investment tendency in the research and development of a specified enterprise. Thus, it is desirable to simultaneously use the indexes of R&D cost ratios $\beta$, $\gamma$ or $\delta$ upon evaluating enterprises.

(2-2) R&D cost ratio $\beta$

The R&D cost ratio $\beta$ is an index showing the ratio of the "R&D cost" to "Value added amount" of a specified enterprise in each specified period. The calculating formula thereof is shown below (Formula 16).

R&D cost ratio $\beta$

= (R&D cost) / (value added amount) ...(Formula 16)

Provided,

R&D cost = R&D cost of a specified enterprise in a first specified period;
Value added amount = value added amount of a specified enterprise in a second specified period;
"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period.

As shown in (Formula 16) above, upon calculating the R&D cost ratio $\beta$, the R&D cost made by a specified enterprise in a specified period is divided by the value added amount of the specified enterprise in the specified period.

Since the R&D cost ratio $\beta$ is an index showing the degree of ratio distributed to the research and development activities among the total amount of value created by a specified enterprise in a specified period, this R&D cost ratio $\beta$ can be also referred to as the "research and development distribution ratio". Therefore, this R&D cost ratio $\beta$ can be considered to show a R&D cost ratio that is more essential than the index of the R&D cost ratio $\alpha$ showing the ratio to sales volume shown in (Formula 15).

(2-3) R&D cost ratio $\gamma$

The R&D cost ratio $\gamma$ is an index showing the ratio of the "R&D cost" to "gross operating profit (GBP)" of a specified enterprise in each specified period. The calculating formula thereof is shown below (Formula 17).

R&D cost ratio $\gamma$

= (R&D cost) / (gross operating profit (GBP)) ...(Formula 17)

Provided,

R&D cost = R&D cost of a specified enterprise in a first specified period;
Gross operating profit = gross operating profit of a specified enterprise in a second specified period;
"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period. The gross operating profit (GBP) disposed as the denominator of (Formula 17) is the amount of profit shown in (Formula 2) above.

Upon calculating the R&D cost ratio γ, as shown in (Formula 17), the R&D cost made by a specified enterprise in a first specified period is divided by the gross operating profit of the specified enterprise in a second specified period.

The R&D cost ratio γ is an index showing the degree of ratio distributed to the research and development activities among the business profit obtained from the manufacture and sales activities of a specified enterprise in a specified period. Thus, an enterprise in which the value of the R&D cost ratio γ is calculated as a large value can be considered to have a high R&D investment tendency, and, an enterprise in which such value is calculated near 0 can be considered to have a tendency of securing profits of its current business rather than R&D investment.

From the nature of the index of the R&D cost ratio γ, there may be cases where this ratio is swollenly calculated since the operating profit significantly decreased due to one reason or another. In this case, since this does not mean that the R&D investment tendency is particularly high, care must be taken upon observing the index. Incidentally, in an enterprise in which the operating profit is 0 or less, the R&D cost ratio γ will be a meaningless value, and, therefore, the R&D cost ratio γ does not have to be calculated in this case. (2-4) R&D cost ratio δ

The R&D cost ratio δ is an index showing the ratio of the "R&D cost" to "total assets" of a specified enterprise in each specified period. The calculating formula thereof is shown below (Formula 18).

```
R&D cost ratio δ

= (R&D cost) / (total assets) …(Formula 18)
```

Provided,

R&D cost = R&D cost of a specified enterprise in a first specified period;
Total assets = total assets of a specified enterprise in a second specified period;
"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period.

Whereas the respective indexes of R&D cost ratio α, β and γ are for measuring the R&D cost ratio in relation to each size of profit (flow), the R&D cost ratio δ shown in (Formula 18) is for measuring the size of R&D cost viewed from the size of assets (stock).

The market related index (M) shown in FIG. 6 is now explained. The market related index (M) includes at least one among the market value added (MVA), price book value ratio (PBR), and expected intellectual property profit (EIPP).

(3-1) Market value added (MVA)

The market value added is an off-balance enterprise value amount sought by deducting the stockholders' equity (amount of net assets) from the total market value. The calculating formula thereof is shown below (Formula 19).

```
Market value added (MVA)

= (total market value) - (stockholders' equity)

= {(total number of outstanding shares) × (stock price)} -

(stockholders' equity) …(Formula 19)
```

Provided,

```
Total market value = (total number of outstanding shares) ×

(stock price) …(Formula 20)
```

As the stock price, the closing price or indicative price at the account end of each enterprise is used. In certain cases, a stock price at the time of analysis may also be used depending on the timing of analysis.

Since the market value added (MVA) is a value obtained by deducing the financial stockholders' equity amount from the enterprise value evaluation amount in the market (total market value), this can also be considered the evaluation of the off-balance assets of the enterprise in the market.

If the market value added (MVA) of an enterprise that possesses useful patents that will yield future profits without bad debts and deteriorated assets is 0 or less, it is possible that this enterprise is being underestimated in the market.

(3-2) Price book value ratio (PBR)

The price book value ratio is a value obtained by dividing the total market value by the equity capital. The calculating formula thereof is shown below (Formula 21).

```
Price book value ratio (PBR)

= (total market value) / (equity capital) …(Formula 21)
```

The price book value ratio (PBR) is an index showing the level of the stock price in relation to the stockholders' equity (amount of net assets) per share. Therefore, when this value is 1 or less, this means that the market is viewing this enterprise to be free of off-balance assets, or has latent loss (deterioration of on-balance assets or undisclosed debts) in excess of such asset value.

(3-3) Expected intellectual property profit (EIPP)

The expected intellectual property profit is the amount of expected return obtained by deducting the theoretical expected return to be obtained from the financial assets and tangible fixed assets from the expected return to be obtained from the evaluation amount of the enterprise value in the market {(liabilities) + (total market value)}. The calculating formula thereof is shown below (Formula 22).

```
Expected intellectual property profit (EIPP)

= (expected enterprise value profit) - {(financial assets) ×

(profit ratio m) + (tangible fixed assets) × (profit ratio f)}

…(Formula 22)
```

Provided,

   Profit ratio m = return on financial assets
   Profit ratio f = return on tangible fixed assets

Here,

```
Expected enterprise value profit

= (fixed liabilities) × (profit ratio a) + (total market

value) × (profit ratio p) …(Formula 23)
```

Provided,

Profit ratio a = return on fixed liabilities
Profit ratio p = return on total market value

Then, the expected intellectual property profit (EIPP) can be represented as follows:

```
Expected intellectual property profit (EIPP)

= {(fixed liabilities) × (profit ratio a) + (total market

value) × (profit ratio p)} - {(financial assets) × (profit

ratio m) + (tangible fixed assets) × (profit ratio f)}

…(Formula 24)
```

The expected intellectual property profit (EIPP) is the balance obtained by deducting the expected return sought from on-balance (on the balance sheet) assets from the expected return sought from the evaluation amount of the enterprise value in the market. This expected intellectual property profit can be considered to be the amount of profit expected by the market to be created by the respective enterprises with the off-balance intellectual properties (intangible assets not indicated in the balance sheet) as the source.

Therefore, in a market where this price is 0 or less, it is evident that the market is viewing an enterprise to have profitability less than the expected return to be obtained from the on-balance assets of such enterprise.

Further, when this amount is equal to or greater than the amount sought with the intellectual property profit (amount of profit obtained by deducting the interest of financial assets and interest of tangible fixed assets from the so-called total business profit in which royalty income of patents and so on is added to the gross operating profit (GBP)), it is evident that the market is evaluating such enterprise to have intellectual properties which are valued equivalent to or in excess of its amount of investment as the result of the R&D investment (recorded as expenses) and so on.

In a balance sheet, (assets) = (liabilities) + (capital).
Further, since (assets) = (liquid assets) + (tangible assets) + (intangible assets), (intangible assets) = (assets) - {(liquid assets) + (tangible assets)}.

Therefore, by substituting (assets), (intangible assets) = {(liabilities) + (capital)} - {(liquid assets) + (tangible assets)}.
The expected intellectual property profit (EIPP) is an index that applies the above to create intangible assets.

In the present embodiment, the (profit ratio m) of financial assets can be substituted with the short-term prime rate. Further, the (profit ratio f) of tangible fixed assets can be substituted with the long-term prime rate. Moreover, the short-term prime rate was used as the profit ratio m, as described above, since financial assets are a relatively short-term repayment of debt, and the long-term prime rate was used as the profit ratio f since the repayment of such fixed assets will continue for a relatively long period of time.

The "expected enterprise value profit" shown in (Formula 22) is an expected return based on the enterprise value, and shows the total of the interest rate of the long-term debt and corporate bond and the interest rate (dividends) to be paid to stockholders.

Here, the "profit ratio a" of fixed liabilities is calculated from the weighted average of the after-tax interest rate of the long-term debt and corporate bond constituting the fixed liabilities. Specifically, the long-term prime rate is substituted as the interest rate of long-term debts, and the corporate bond rate is calculated by seeking the ratio of the corporate bond interest in relation to the corporate bond, and weighting them by the ratio of the long-term debt and corporate bond among the fixed liabilities to seek weighted average value. And {1-(corporate tax rate)} is multiplied with the weighted average value sought above. The calculating formula thereof is shown below (Formula 25).

```
Profit ratio a

= [{(long-term prime rate) × (long-term debt) + (corporate bond rate of interest) × (corporate bond)} / {(long-term debt)

+ (corporate bond)}] × {(1-(corporate tax rate)) …(Formula 25)
```

The "profit ratio p" of the equity capital (= total market value) shown in (Formula 23) above is sought with the CAPM method.

CAPM is the abbreviation of (Capital Asset Pricing Model), also called as capital asset value model, and is one of the investment strategies to be used upon combining shares and safe assets (deposits and so on) upon conducting asset management. The calculating formula thereof is shown below (Formula 26).

```
Profit ratio p of equity capital

= (risk-free rate) + (β value) × {(market risk) - (risk-free

rate)} …(Formula 26)
```

A risk-free rate is the minimum interest rate to be guaranteed even when there is absolutely no risk, and a 10-year long-term government bond yield rate is used here. A market risk is a fluctuating risk (profit), and a 30-year simple average value of the return on stock (for instance, a value obtained by subtracting the average stock price of 30 years ago from the current average stock price).

The β value is an index showing the difference upon comparison with the transition of the Nikkei Stock Average. The β value is a numerical value representing the sensitivity of the enterprise in the stock market, and if this value exceeds 1, the price rise or price drop will become greater than the average transition of the stock market. Secure companies such as electrical power companies have a β value that is close to 0, and high-risk, high-return enterprises such as IT venture companies have a high β value.

As a general indication, when the stock price of a certain enterprise is compared with the transition of the Nikkei Stock Average, the value may be:

(1) 0.5 when there is no significant fluctuation;
(2) 1.0 if the fluctuation is roughly the same;
(3) 1.5 when there is significant fluctuation; or
(4) 2.0 when there is significant fluctuation and such fluctuation is fluid;

but there are cases where transition and fluctuation of stock prices of enterprises are sought and calculated extremely accurately.

Without limitation to the foregoing values, other values may be used as a risk-free rate or a market risk, and the β value may be a free value that is not dependent on the foregoing calculation, and this may also be set forth with a value such as the rise and fall of interest rate or inflation rate.

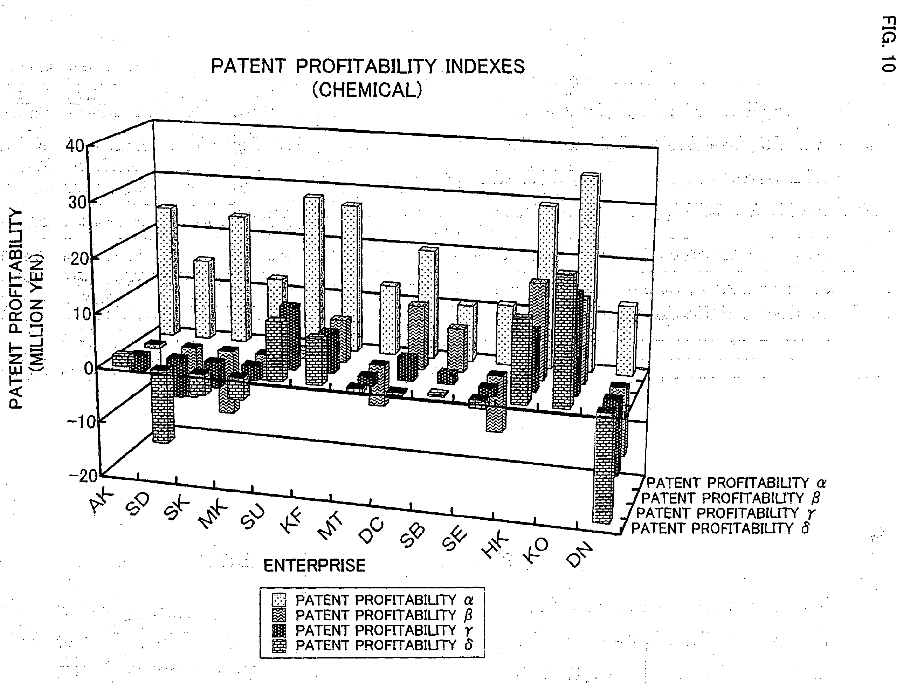

FIG. 10 shows a display example of the patent profitability α, β, γ and δ calculated regarding the 13 companies in the chemical industry.

In the display example shown in FIG. 10, the respective indexes of the patent profitability are disposed in the y axis in the order of patent profitability α, β, γ and δ from the back of FIG. 10. The name of each enterprise in which the patent profitability index was calculated is disposed on the x axis as abbreviations such as DN, KO and so on. The z axis is three-dimensionally displaying the values (million yen) of the respective patent profitabilities α, β, γ and δ. Here, the three-dimensional bar graph of the patent profitability of enterprises in which the patent profitability value is calculated as a negative value is extending downward (minus direction) from the 0 (yen) base with the top shown in black.

When displaying FIG. 10, one or more indexes among the patent profitability $\alpha$, patent profitability $\beta$, patent profitability $\gamma$, or patent profitability $\delta$ is calculated with the patent profitability calculation means of the information processing means 380 and the like regarding a plurality of enterprises. Then, display data for displaying the ratio of index per index or per enterprise regarding the patent profitability ratio indexes of the calculated plurality of enterprises is generated with the display data generation means of the information processing means 380 and the like and outputs this to the display means or the like. When displaying the patent profitability per index or per enterprise, this may be represented in a three-dimensional graph as shown in FIG. 10, or a two-dimensional graph may be used, or this may be represented in a tabular form.

Although patent profitability $\alpha$ will be a positive value since it is an index obtained by dividing (gross operating profit (GBP)) + (patent royalty income) by (total number of effective patents), patent profitabilities $\beta$, $\gamma$ and $\delta$ are comparisons with the same business category, and will be a positive value if it is above average, and will be a negative value if it below average.

Enterprises in which the index of all patent profitabilities calculated as a positive value are the five companies of SU, KF, SB, HK and KO, and enterprises in which the index of all patent profitabilities other than patent profitability $\alpha$ calculated as a negative value are the six companies of SD, SK, MK, MT, SE and DN.. Company AK shows a positive value for patent profitability $\delta$, but shows negative values for all other patent profitabilities. Therefore, among the 13 enterprises shown in FIG. 10, roughly half are above average and roughly half are below average.

The patent profitabilities of Company KO are all calculated as a positive value for the respective indexes, and the amounts thereof are also high. In particular, it is acknowledged that the index of patent profitability $\alpha$ {(GBP) + (patent royalty income)} is considerably higher than the other companies, and the value added amount and earnings on intellectual asset are also higher than companies in the same business category. Thus, it is evident that Company KO is generating high profits for each effective patent. Roughly the same thing can be said about Company HK.

Meanwhile, Company DN which in particular has negative patent profitability values has a low patent profitability $\alpha$, the value of {(gross operating profit (GBP)) + (patent royalty income)} per effective patent is also low, and the value added amount and earnings on intellectual asset are inferior in comparison to companies in the same business category. From this, it is evident that this enterprise is not gaining much profit from patents. Roughly the same thing can be said about Company SD and Company SK.

Next, a case of combining the respective indexes of patent profitability and other indexes for conducting a comparison is explained.

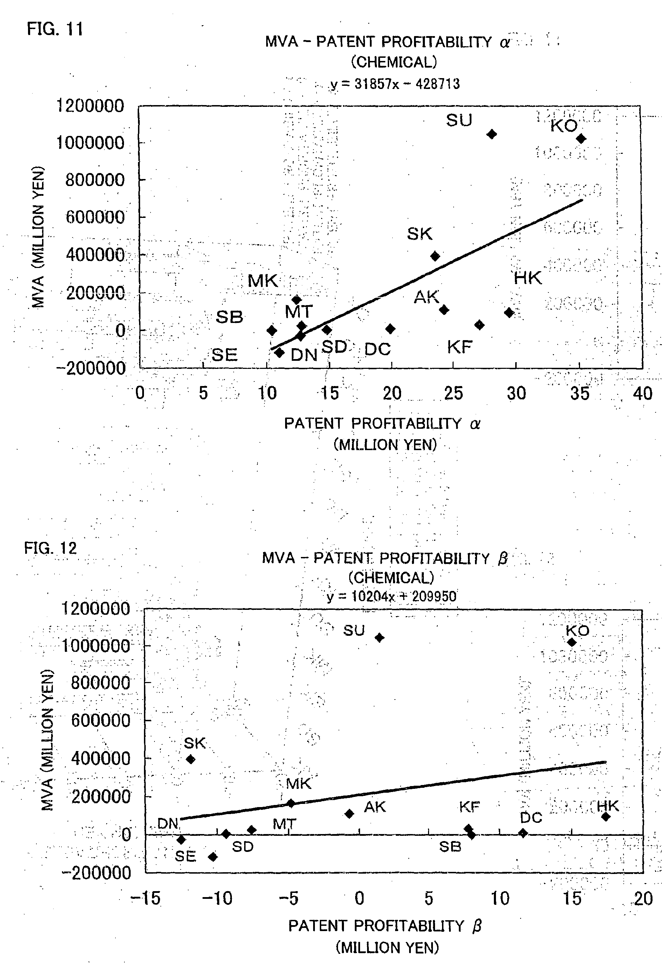

FIG. 11 is a diagram showing a display example of associating and displaying the patent profitability $\alpha$ and market value added (MVA) calculated regarding the 13 companies in the chemical industry.

With the display example shown in FIG. 11, the patent profitability $\alpha$ is plotted on the horizontal axis (x axis), and the market value added (MVA) is plotted on the vertical axis (y axis). Incidentally, in the vicinity of the plotted points, abbreviations such as KO and SK are provided in order to identify the plotted companies. The straight line shown in the graph is a regression line showing the average value of the respective plotted points, and the calculating formula thereof is represented at the upper part of the graph.

In the case displaying FIG. 11, the patent profitability $\alpha$ is foremost calculated with the patent profitability calculation means of the information processing means 380 and the like. And, the display data for associating and displaying the patent profitability $\alpha$ and market value added (MVA) as shown in FIG. 11 is generated with the display data generation means of the information processing means 380 and the like, and output to the display means or the like. When associating and displaying the patent profitability the market value added (MVA), this may be represented in a two-dimensional graph as shown in FIG. 11, or a three-dimensional graph may be used, or this may be represented in a tabular form.

The value of the market value added (MVA) shown in the y axis of FIG. 11 is obtained by deducting the amount of "stockholders' equity" from the "total market value (enterprise value evaluation amount)". Thus, an enterprise having a high market value as a result of its evaluation being reflected in its stock price can also be considered to have a high stock price. Therefore, according to FIG. 11, the user is able to observe how the value of patent profitability $\alpha$ per effective patent among the total number of effective patents is reflected in the stock market and the like.

Patent profitability $\alpha$ is obtained through dividing the sum of the "gross operating profit (GBP)" and "patent royalty income" by the total number of effective patents.

As shown in FIG. 11, Company KO is showing a particularly high value for patent profitability $\alpha$, and it also has a high value for the market value added (MVA). Similarly, Company SU is showing a relatively high value for patent profitability $\alpha$, and it also has a high value for the market value added (MVA). It is evident that these two companies are showing extraordinary high values.

With enterprises having a high patent profitability $\alpha$, it could be said that these enterprises have a large total of "gross operating profit (GBP)" and "patent royalty income", or, even if the number of effective patents is small, have extremely powerful patents and therefore have a relatively large total "gross operating profit (GBP)" and "patent royalty income".

In addition to the two companies Company SU and Company KO above the average regression line, a total of six companies including Company SK, Company MK, Company MT and Company SB is also positioned above the average regression line. Six companies are positioned below the average regression line; namely, Company HK, Company KF, Company AK, Company DC, Company SD and Company SE. Thus, half of the companies are positioned above the average regression line and the other half of the companies are positioned below the average regression line.

From this graph, Company KO and Company SU have a large total value of "gross operating profit (GBP)" and "patent royalty income", and it is considered that this evaluation is reflected on their stock prices, whereby the value of the market value added (MVA) is also showing a high value. Contrarily, although Company HK shows a high total value of "gross operating profit (GBP)" and "patent royalty income", the value of the market value added (MVA) is a low value. From this, it is possible to assume that this company has facing some kind of administrative problem. Moreover, Company SE has a low patent profitability $\alpha$ value and a low market value added (MVA) value. Therefore, it is considered that the stock price of this company is not rising since the amount of profit per effective patent is small, and this is reflected in the negative value of the market value added (MVA) value.

FIG. 12 is a diagram showing a display example of associating and displaying the patent profitability $\beta$ and market value added (MVA) calculated regarding the 13 companies in the chemical industry. When associating and displaying the patent profitability per index or per enterprise, this may be represented in a two-dimensional graph as shown in FIG. 12, or a three-dimensional graph may be used, or this may be represented in a tabular form.

With the display example shown in FIG. 12, the patent profitability $\beta$ is plotted on the horizontal axis (x axis), and the market value added (MVA) is plotted on the vertical axis (y axis). Incidentally, in the vicinity of the plotted points, abbreviations such as KO and SK are provided in order to identify the plotted companies. The straight line shown in the graph is a regression line showing the average value of the respective plotted points, and the calculating formula thereof is represented at the upper part of the graph.

Patent profitability $\beta$ is an index obtained through dividing the sum of "excess value added amount = value added amount exceeding the industry average" and the "patent royalty income" by the "total number of effective patents".

Six companies; namely, Company HK, Company KO, Company DC, Company KF, Company SB and Company SU have positive values for patent profitability $\beta$, and seven companies; namely, Company AK, Company MK, Company MT, Company SD, Company SE, Company SK and Company DN have negative values for patent profitability $\beta$. Enterprises positioned above the average regression line of these 13 companies in the chemical industry are few at four companies including Company KO, Company SU, Company SK, and Company MK which is calculated near the average value.

By observing FIG. 12, it is possible to read that Company KO has high patent profitability $\beta$ and high market value added (MVA). Although the patent profitability $\beta$ value of Company SU barely shows a positive value, the market value added (MVA) is showing an extremely high value.

Although Company HK is showing a high patent profitability $\beta$ value, its market value added (MVA) is a low value.

Since Company KO has a significantly high market value added in comparison to the industry average, it is assumed that the company's business performance has received high evaluation, whereby the stock price is also high. Contrarily, although Company HK has a significantly high patent profitability $\beta$ in comparison to the industry average, its market value added (MVA) is low. Therefore, it is assumed that this company has some kind of negative factor that is causing a low market value, or has some kind of administrative problem. Since Company DN has a negative patent profitability $\beta$ value, the enterprise evaluation in the market is low, whereby the market value added (MVA) is also calculated as a negative value.

Although the patent profitability $\beta$ value of Company SK is calculated as a negative value, its market value added (MVA) is showing a high value. Therefore, it is assumed that even though the value added amount is low, the company has some other attractive phenomenon causing a high market value.

Excluding the two companies of Company KO and Company SU, although there are some variations in the patent profitability $\beta$ value, most of the companies are positioned where the market value added (MVA) value is not very high. Therefore, excluding the foregoing two companies, it could be said that the patent profitability $\beta$ does not have a deep correlation with the market value added (MVA) value.

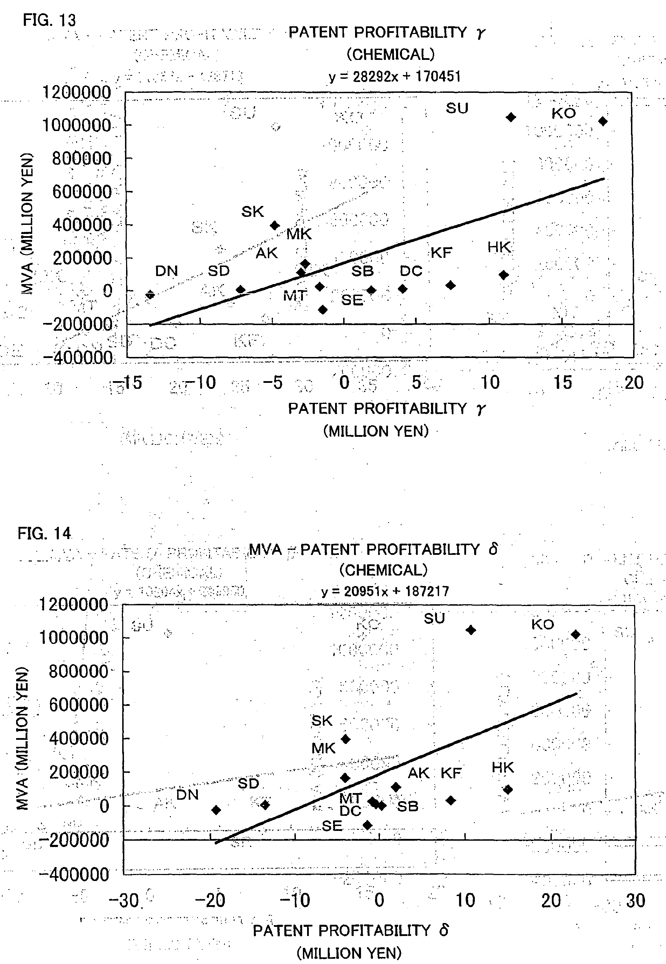

FIG. 13 is a diagram showing a display example of associating and displaying the patent profitability $\gamma$ and market value added (MVA) calculated regarding the 13 companies in the chemical industry. When associating and displaying the patent profitability per index or per enterprise, this may be represented in a two-dimensional graph as shown in FIG. 13, or a three-dimensional graph may be used, or this may be represented in a tabular form.

With the display example shown in FIG. 13, the patent profitability $\gamma$ is plotted on the horizontal axis (x axis), and the market value added (MVA) is plotted on the vertical axis (y axis). Incidentally, in the vicinity of the plotted points, abbreviations such as KO and SK are provided in order to identify the plotted companies. The straight line shown in the graph is a regression line showing the average value of the respective plotted points, and the calculating formula thereof is represented at the upper part of the graph.

Patent profitability $\gamma$ is obtained through dividing the sum of the "excess GBP = GBP exceeding the industry average" and the "patent royalty income" by the "total number of effective patents".

Six companies; namely, Company KO, Company SU, Company HK, Company KF, Company DC and Company SB have positive values for patent profitability $\gamma$, and seven companies; namely, Company SE, Company MT, Company MK, Company AK, Company SD and Company DN have negative values for patent profitability $\gamma$.

Seven companies; namely, Company KO, Company SU, Company MK, Company AK, Company SK, Company SD and Company DN are positioned above the average regression line.

Here also, Company KO is showing a high patent profitability $\gamma$ index and market value added (MVA) index, and it is evident that Company KO has a high market value. Company SU has a low patent profitability $\beta$ value in comparison to Company KO (refer to FIG. 12), but is showing a relatively high patent profitability $\gamma$ value. Therefore, it is assumed that this company has a high market value, whereby the market value added (MVA) is also high.

Although Company HK has a high patent profitability $\gamma$ value, the market value added (MVA) is of a low value. In the case of Company DN, since the patent profitability $\gamma$ value is calculated low, the market value of the company is low, thereby the market value added (MVA) is also of a negative value.

FIG. 14 is a diagram showing a display example of associating and displaying the patent profitability $\delta$ and market value added (MVA) calculated regarding the 13 companies in the chemical industry. When associating and displaying the patent profitability and the market value added (MVA), this may be represented in a two-dimensional graph as shown in FIG. 14, or a three-dimensional graph may be used, or this may be represented in a tabular form.

With the display example shown in FIG. 14, the patent profitability $\delta$ is plotted on the horizontal axis (x axis), and the market value added (MVA) is plotted on the vertical axis (y axis). Incidentally, in the vicinity of the plotted points, abbreviations such as KO and SK are provided in order to identify the plotted companies. The straight line shown in the graph is a regression line showing the average value of the respective plotted points, and the calculating formula thereof is represented at the upper part of the graph.

Patent profitability $\delta$ is a value obtained by multiplying the total assets to the portion (ratio) in which the return on intellectual asset (ROIA) obtained through dividing the earnings on intellectual asset (EOIA) by the total assets exceeded the industry average, and dividing the obtained value by the total number of effective patents, and the patent profitability $\delta$ is represented by (excess earnings on intellectual asset (EXEOIA)) / (total number of effective patents). This patent profitability $\delta$ index is useful in estimating the quality of patents with a macro-like approach of patents.

According to FIG. 14, it is evident that Company KO and Company SU show a high patent profitability $\delta$ value and a high market value added (MVA) value. In the case of Company HK, although the patent profitability $\delta$ is showing a high value, the market value added (MVA) is not such a high value.

Six companies; namely, Company KO, Company HK, Company SU, Company KF, Company AK and Company SB have positive values for patent profitability $\delta$, and Company DC, Company MT, Company SE, Company SK, Company MK, Company SD and Company DN are the companies that have negative values.

Here also, it is assumed that Company KO has a high market value since its patent profitability $\delta$ value is high, whereby the market value added (MVA) is also a high value. The same could be said for Company SU.

Although Company HK is showing a patent profitability $\delta$ value, its market value added (MVA) is of a low value. Company DN has a low patent profitability $\delta$ value and a low market value added (MVA) value. This means that the two companies most likely have some kind of administrative problem.

As described above, by associating the representing the respective indexes showing the patent profitability and the index of market value added (MVA), it is possible to know to what degree a single effective patent is contributing to the value of market value added (MVA), and this is useful in evaluating enterprises.

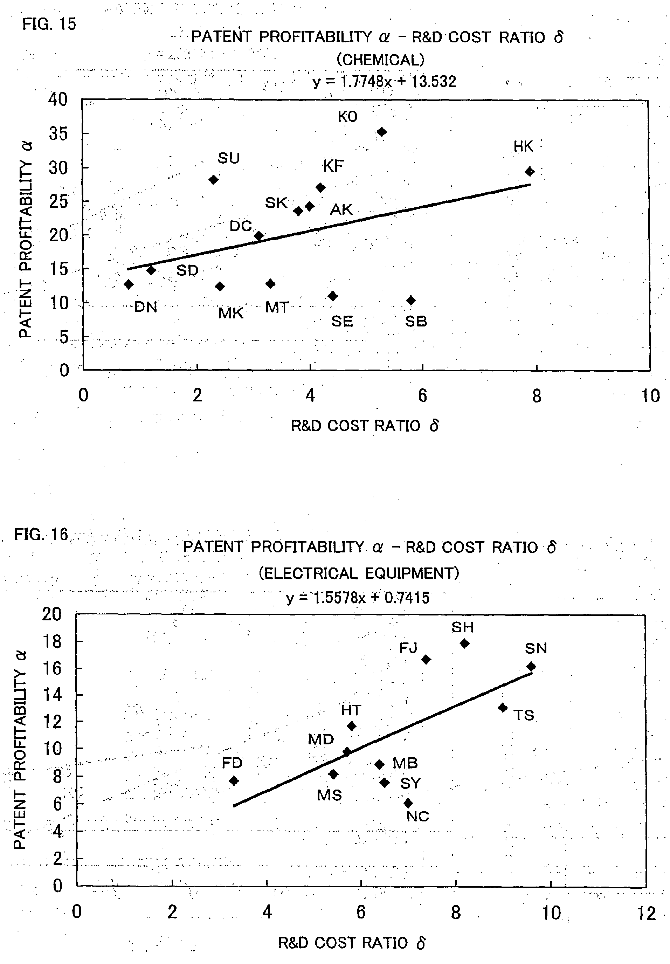

FIG. 15 is a diagram showing a display example of associating and displaying the patent profitability $\alpha$ and R&D cost ratio $\delta$ calculated regarding the 13 companies in the chemical industry.

With the display example shown in FIG. 15, the R&D cost ratio $\delta$ is plotted on the horizontal axis (x axis), and the patent profitability $\alpha$ is plotted on the vertical axis (y axis). Incidentally, in the vicinity of the plotted points, abbreviations such as KO and HK are provided in order to identify the plotted companies. The straight line shown in the graph is a regression line showing the average value of the respective plotted points, and the calculating formula thereof is represented at the upper part of the graph.

Upon displaying FIG. 15, the patent profitability $\alpha$ is calculated with the patent profitability calculation means of the information processing means 380 and the like. Then, the R&D cost ratio $\delta$ is calculated with the R&D cost ratio calculation means of the information processing means 380 and the like, and display data for associating and display the two as shown in FIG. 15 is generated with the display data generation means of the information processing means 380 and the like, and then output to the display means or the like.

Upon associating and displaying the patent profitability and R&D cost ratio, this may be represented in a two-dimensional graph as shown in FIG. 15, or a three-dimensional graph may be used, or this may be represented in a tabular form.

By using FIG. 15, it is possible to see the relationship of the R&D cost ratio to the total assets and the profit per effective patent in the respective enterprises.

Seven companies; namely, Company HK, Company KO, Company KF, Company AK, Company SK, Company DC and Company SU are positioned above the average regression line. It is possible to consider that the enterprises positioned above the average regression line are gaining larger profits from patents in comparison to the R&D cost ratio.

Contrarily, Company SB, Company SE, Company MT, Company MK, Company SD and Company DN are the companies positioned below the average regression line. It is possible to consider that the enterprises positioned below the average regression line are not gaining much profit from patents in comparison to the costs spent on research and development.

Company HK shows a high value (value of R&D cost ratio $\delta$) at 8 for investments made in research and development in relation to the total assets, and the value of patent profitability $\alpha$ is comparatively high. From this, it is possible to consider that this enterprise can be evaluated highly regarding research and development. Although Company KO shows roughly 5 as the value for the R&D cost ratio $\delta$, the index of patent profitability $\alpha$ is shown an extremely high value at 35. Therefore, this company can be evaluated highly. Further, the same thing can be said about Company SU and Company KF.

With respect to Company SB and Company SE, although they are investing much money in the R&D cost, not much profit is being gained from patents, and it is possible to consider that these companies have some kind of problem in the acquisition or utilization of patents.

FIG. 16 is a diagram showing a display example of associating and displaying the patent profitability $\alpha$ and R&D cost ratio $\delta$ calculated regarding the 11 companies in the electrical equipment industry.

With the display example shown in FIG. 16, the R&D cost ratio $\delta$ is plotted on the horizontal axis (x axis), and the patent profitability $\alpha$ is plotted on the vertical axis (y axis). Incidentally, in the vicinity of the plotted points, abbreviations such as SH and SN are provided in order to identify the plotted companies. The straight line shown in the graph is a regression line showing the average value of the respective plotted points, and the calculating formula thereof is represented at the upper part of the graph.

Six companies; namely, Company SN, Company SH, Company FJ, Company HT, Company MD and Company FD are positioned above the average regression line in the electrical equipment industry. It is possible to consider that the enterprises positioned above the average regression line are companies that gain much profit from patents in comparison to the R&D cost ratio.

Company TS, Company MB, Company SY, Company NC and Company MS are positioned below the average regression line, and it is possible to consider that the enterprises positioned below the average regression line are not gaining much profit from patents in comparison to the costs spent on research and development.

Company SN is showing a high R&D cost ratio $\delta$ value and a high patent profitability $\alpha$ value. Similarly, Company SH and Company FJ are also showing high values. In the case of Company NC, although the company is showing a relatively high R&D cost ratio $\delta$, it is possible to read that the patent profitability $\alpha$ value is not very high.

The R&D cost ratio $\delta$ of Company SH is calculated at roughly 8, and the patent profitability $\alpha$ value is also considerably high at 18. Therefore, it is possible to consider that this enterprise is investing a considerable amount of money in research and development, is gaining extremely high profits per effective patent, and can be evaluated highly. The same can be said about Company SN and Company FJ.

Meanwhile, with Company NC, it is considered that this enterprise has low profits per effective patent in comparison to the amount of investment in research and development, and it is possible to assume that this enterprise has some problems in the acquisition or utilization of patents.

Upon comparing FIG. 15 and FIG. 16, the highest R&D cost ratio $\delta$ value is 8 with enterprises in the chemical industry, and most enterprises are calculated between 2 to 4, and the patent profitability $\alpha$ is distributed between 10 to 35. Meanwhile, in the electrical equipment industry, many enterprises have a R&D cost ratio $\delta$ of 6 or higher and 10 or lower, and the patent profitability $\alpha$ value is 6 or higher, and 18 at maximum.

Like this, when comparing the two industries, in the chemical industry, although R&D cost is not made in spite of the total assets when compared with the electrical equipment industry, roughly double the profit of the electrical equipment industry is yielded per effective patent. According to the present invention, since it is possible to read the trend of both industries, this is useful in evaluating enterprises per industry.

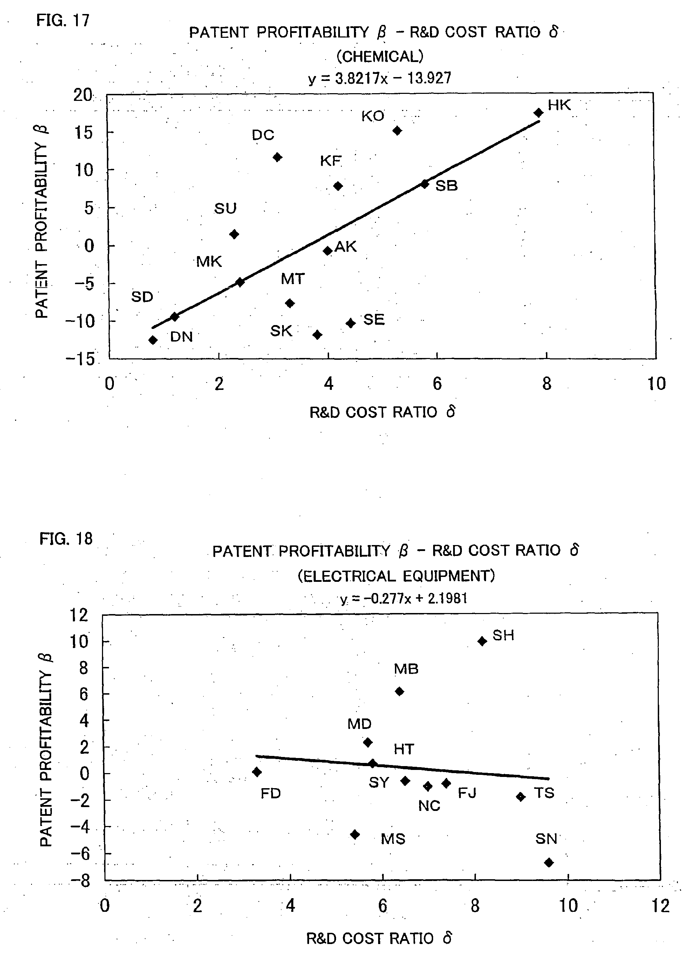

FIG. 17 is a diagram showing a display example of associating and displaying the patent profitability $\beta$ and R&D cost ratio $\delta$ calculated regarding the 13 companies in the chemical industry.

With the display example shown in FIG. 17, the R&D cost ratio $\delta$ is plotted on the horizontal axis (x axis), and the patent profitability $\beta$ is plotted on the vertical axis (y axis). Incidentally, in the vicinity of the plotted points, abbreviations such as KO and HK are provided in order to identify the plotted companies. The straight line shown in the graph is a regression line showing the average value of the respective plotted points, and the calculating formula thereof is represented at the upper part of the graph.

Since the R&D cost ratio $\delta$ is the ratio of R&D cost in relation to the total assets, it is possible to compare the amount of investment made in the R&D cost regardless of the size of the enterprise. Since patent profitability $\beta$ is an index obtained by dividing the sum of the "value added amount (excess value added amount)" exceeding the industry average and the "patent royalty income", in FIG. 17, it is possible to display and notify the user of how far the R&D cost to the total assets is away from the industry average per effective patent. Upon associating and displaying the patent profitability and R&D cost ratio, this may be represented in a two-dimensional graph as shown in FIG. 17, or a three-dimensional graph may be used, or this may be represented in a tabular form.

As shown in FIG. 17, seven companies; namely, Company HK, Company KO, Company KF, Company DC, Company SU, Company MK and Company SD are positioned above the average regression line. It is possible to consider that the enterprises positioned above the average regression line are companies that gain much profit from patents in comparison to the R&D cost ratio.

Meanwhile, Company SB, Company SE, Company AK, Company SK, Company MT and Company DN are the companies positioned below the average regression line. It is possible to consider that the enterprises positioned below the average regression line are not gaining much profit from patents in comparison to the costs spent on research and development.

Enterprises having a positive value for patent profitability β; that is, enterprises that are positioned above the industry average are the six companies of Company HK, Company KO, Company SB, Company KF, Company DC and Company SU, and, contrarily, enterprises having a negative value for patent profitability β; that is, enterprises that are positioned below the industry average are the seven companies of Company AK, Company MK, Company MT, Company SE, Company SK, Company SD and Company DN.

FIG. 18 is a diagram showing a display example of associating and displaying the patent profitability β and: R&D cost ratio δ calculated regarding the 11 companies in the electrical equipment industry.

With the display example shown in FIG. 18, the R&D cost ratio δ is plotted on the horizontal axis (x axis), and the patent profitability β is plotted on the vertical axis (y axis). Incidentally, in the vicinity of the plotted points, abbreviations such as SH and MB are provided in order to identify the plotted companies. The straight line shown in the graph is a regression line showing the average value of the respective plotted points, and the calculating formula thereof is represented at the upper part of the graph.

In FIG. 18, it is possible to display and notify the user of how far the R&D cost to the total assets is away from the industry average per effective patent.

Four companies; namely, Company SH, Company MB, Company MD and Company HT are positioned above the average regression line. It is possible to consider that the enterprises positioned above the average regression line are companies that gain much profit from patents in comparison to the R&D cost ratio.

Meanwhile, seven companies; namely, Company TS, Company SN, Company FJ, Company NC, Company SY, Company MS, Company FD are positioned below the average regression line. It is possible to consider that the enterprises positioned below the average regression line are not gaining much profit from patents in comparison to the costs spent on research and development.

Enterprises having a positive value for patent profitability β; that is, enterprises that are positioned above the industry average are the five companies of Company SH, Company MB, Company MD, Company HT and Company FD, and, contrarily, enterprises having a negative value for patent profitability β; that is, enterprises that are positioned below the industry average are the six companies of Company TS, Company SN, Company FJ, Company NC, Company SY and Company MS.

Company SH has a high R&D cost ratio δ value at 8, and the patent profitability β value is also high at nearly 10. Although the R&D cost ratio δ value of Company MB is slightly higher than 6, the patent profitability β value is also calculated to be 6, and it is possible to read that the company is efficiently gaining patent profits. Therefore, in the judgment based on these two indexes, enterprises such as Company SH, Company MB and Company MD are enterprises that can be evaluated highly.

Meanwhile, although the R&D cost ratio δ of Company SN is showing a high value, the patent profitability β is a negative value at nearly -7. Further, in the case of Company TS also, although the R&D cost ratio δ is of a relatively high value, the patent profitability β is a value near -2. In the case of both of the companies, not much profit is being gained from patents in spite of the amount invested in the R&D cost, and these enterprises can be given a low evaluation.

When viewing FIG. 18, with the average of 11 enterprises in the electrical equipment industry 11, the regression line is calculated in a downward sloping manner. In other words, in the electrical equipment industry, too much investment in research and development tends to aggravate patent profits.

Upon comparing FIG. 17 and FIG. 18, whereas the R&D cost ratio δ value in the electrical equipment industry is distributed between 6 and 10, in the chemical industry, this is distributed between 2 and 6. Further, although the patent profitability β value shows a maximum value of 10 in the electrical equipment industry, in the chemical industry, there are enterprises that show values between 10 to nearly 18. Upon comparing the two industries, the chemical industry, comparison to the electrical equipment industry, is investing smaller amounts in the R&D cost in spite of the total assets, and is also gaining high profits.

Like this, by comparing different industries, it is possible to evaluate an enterprise more accurately.

Further, although not illustrated, it is also possible to associate and display patent profitability γ or δ and R&D cost ratio δ. By associating and displaying patent profitability γ and R&D cost ratio δ, it is possible to display and notify the user of the relationship of the excess gross operating profit (GBP) and R&D cost ratio in the respective enterprises.

Further, by associating and displaying patent profitability δ and R&D cost ratio δ, it is possible to display and notify the user of the relationship of the excess earnings on intellectual asset (EXEOIA) and R&D cost ratio in the respective enterprises.

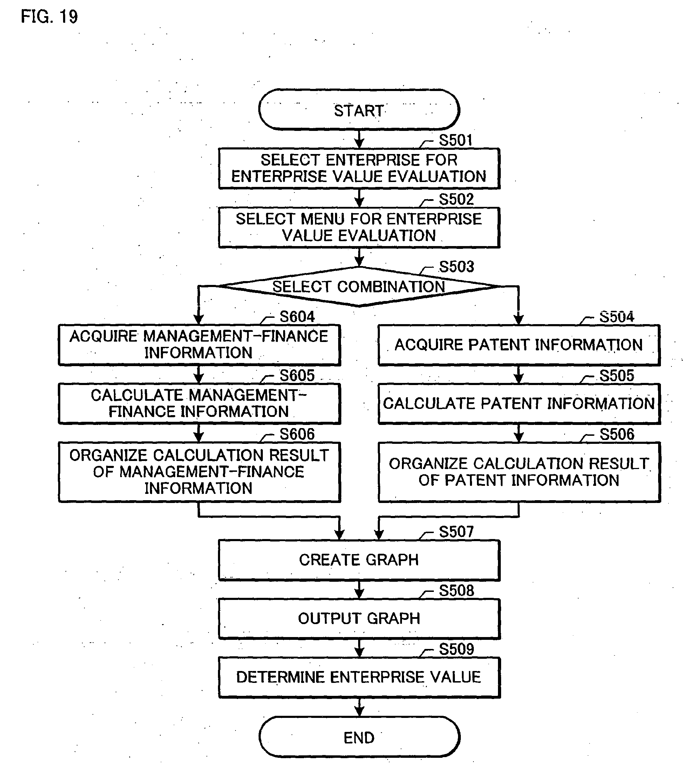

FIG. 19 shows a flowchart of calculating and outputting the respective indexes of patent profitability, R&D cost ratio, expected intellectual property profit, and so on.

At S501 "select enterprise for enterprise value evaluation", the information processing means 380 receives the input of a display command of a screen for selecting an enterprise from a user via the input means 370 such as a keyboard and the bus 399. The information processing means 380 reads the display data upon selecting the enterprise from the recording means 384 based on such command, converts this into a display image data, and outputs such data to the display interface 373.

The display interface 373 that acquired the display data from the information processing means 380 converts the display data to an image signal corresponding to the display means 372 and outputs the signal. The display means 372 displays a screen based on the display image signal input from the display interface 373 and notifies the user.

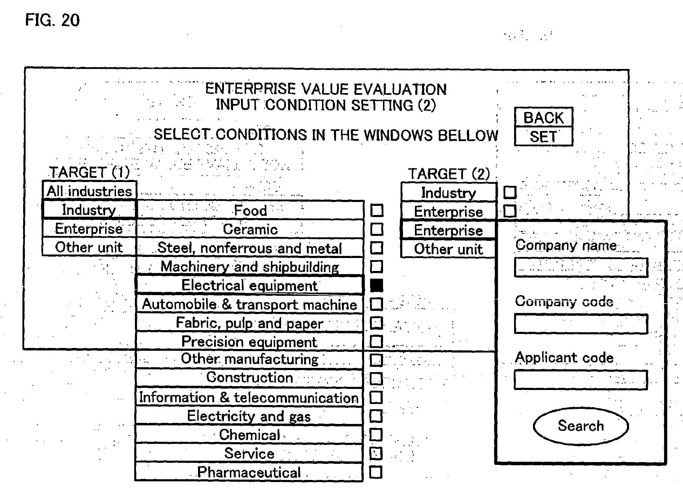

FIG. 20 is a diagram showing a display example of the enterprise value evaluation input condition setting screen for selecting the conditions of the target industry or target enterprise upon calculating the index for judging the enterprise value.

The user, while viewing the enterprise selection screen displayed on the display means 372, selects one or a plurality of evaluation target enterprises. In the example shown in FIG. 20, the user is selecting the "electrical equipment" industry among the "industries" as the broad classification among the evaluation target enterprises.

Further, the user selects "enterprises" as the detailed classification of the individual enterprises among the evaluation enterprise targets, and is able to designate input conditions such as the "enterprise name", "enterprise code", or "applicant code". When the user is to designate individual enterprises, the user selects "enterprise" on the right side of FIG. 20 and inputs the enterprise name, enterprise code or applicant code.

When the user selects the "set" button and the input condition setting of the enterprise value evaluation is ended, the input information is conveyed to the information processing means 380. The information processing means 380 sets a flag of the enterprise as the "target" input by the user, displays a selection mark at the portion of the index selected by the user, displays information such as company names, codes for companies and applicants which have been set on the display means 372, and notifies the user of the set information.

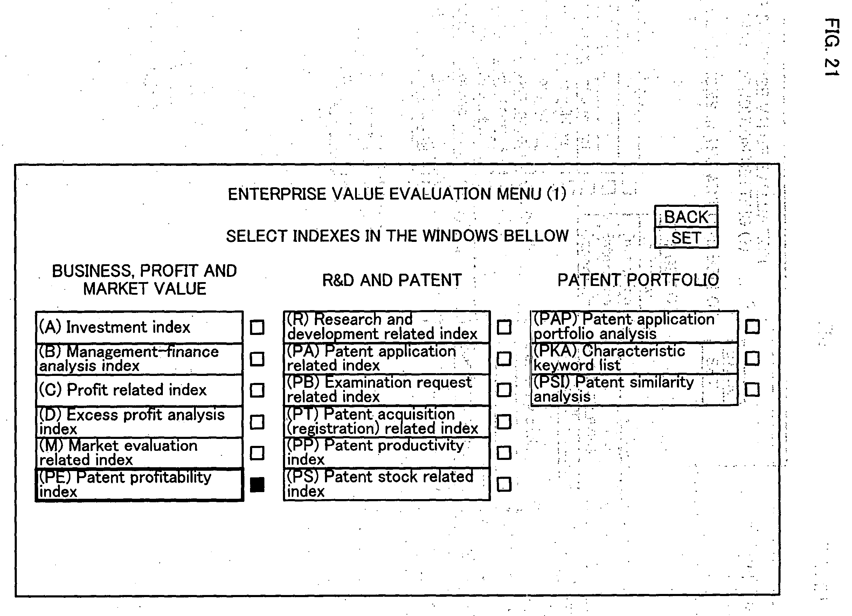

When the user selects the "set" button and the input condition setting of the enterprise value evaluation is ended, the information processing means 380 subsequently reads the display data of the display menu for selecting the type of index to evaluate the enterprise value from the recording means 384, and, for example, displays the enterprise value evaluation menu as shown in FIG. 21 on the display means 372.

Next, at S502 "select menu for enterprise value evaluation", the user, while viewing the enterprise value evaluation menu displayed on the display means 372, selects the desired index for evaluating the enterprise value and inputs such index.

When selecting an index from the enterprise value evaluation menu shown in FIG. 21, the user selects a desired index from the selection menu of "business, profit, and market value" or "R&D, patent", or "patent portfolio". In the example shown in FIG. 21, the user is selecting the item of "(PE) patent profitability index" belonging to the field of "business, profit, and market value".

When the user inputs information for selecting the index of "(PE) patent profitability index", such input information is conveyed to the information processing means 380. The information processing means 380 outputs the command for displaying a selection mark at the portion of the index selected by the user to the display interface 373, and outputs information for displaying the respective indexes existing at a lower level in the form of a pulldown menu to the display interface 373. Incidentally, in the example shown in FIG. 21, the mark of the selected item is changed from a white square to a black square.

Next, the user selects a desired index (for instance, "patent profitability index α") to be calculated among the respective indexes in the lower hierarchy of the "(PE) patent profitability index" displayed on the display means 372.

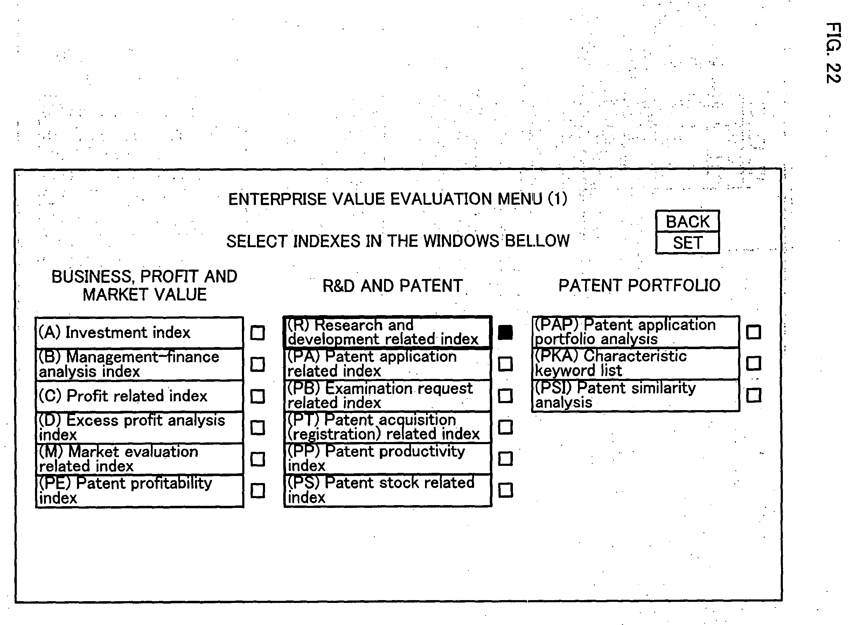

Further, when the user wishes to conduct a search by mutually associating the "R&D patent related index" and "business, profit, and market value related index", the user additionally selects "(R) research and development index" or the like shown in FIG. 22.

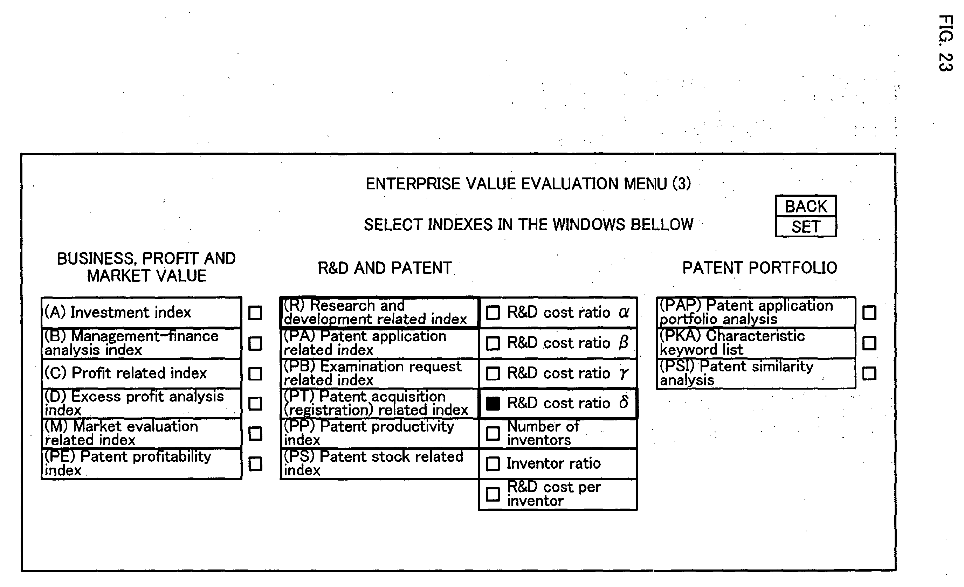

When the user inputs information for selecting the "(R) research and development index", the acquired information processing means 380 that acquired such input information outputs a command to the display interface 373 for displaying a selection mark at the portion of the index selected by the user, and outputs information to'the display interface 373 for displaying the respective indexes belonging to the lower level of the "(R) research and development index" in the form of a pulldown menu as shown in FIG. 23.

When the user selects the "R&D cost ratio δ" index from the pulldown menu shown in FIG. 23, the input information is conveyed to the information processing means 380. The information processing means 380 sets a flag for setting forth the calculating formula of the index, displays a selection mark at the portion of the index selected by the user, and notifies the user of the set information.

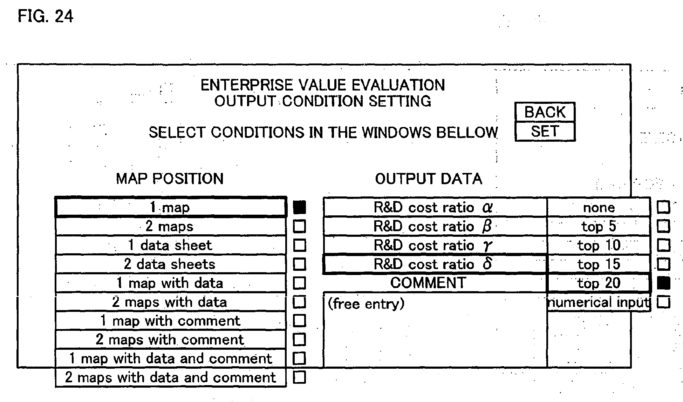

When the user selects the "set" button and the selection processing of the type of index for evaluating the enterprise value is ended, the information processing means 380 outputs a command for displaying the enterprise value evaluation output condition setting screen shown in FIG. 24 on the display means 372.

The user, while viewing the enterprise value evaluation output condition setting screen displayed on the display means 372, selects a desired display mode. In the example shown in FIG. 24, "single map" is selected as the information relating to the "map position", the "R&D cost ratio $\delta$" is selected as the "output data", and "upper 20" is selected as the volume of information to be output and displayed.

When the user selects the "set" button and the setting of the enterprise value evaluation output conditions is ended, processing to be performed by the information processing means 380 proceeds to the processing of S503 "select combination" shown in FIG. 19.

When the user designates the implementation of operation relating to management-finance information and patent information such as the "(PE) patent profitability index", the processing to be performed by the information processing means 380 proceeds to the processing of S604 "acquire management-finance information" and S504 "acquire patent information". Incidentally, when the user only designates an independent operation of the "R&D cost ratio" or the like, the information processing means 380 does not select the combination processing and implements only the processing of S604 onward.

For example, when the user designates the operation of "patent profitability $\alpha$" from the selection menu of "(PE) patent profitability index", at S604 and S504, the information processing means 380 performs processing for acquiring information required for calculating the indexes such as the gross operating profit (GBP), patent royalty income, and registration gazettes such as patent gazettes and utility model registration gazettes of the respective enterprises from the database 20 based on the operation processing of the "patent profitability $\alpha$" and information relating to the designated enterprise. After the acquisition processing of management-finance information is ended, the processing to be performed by the information processing means 380 proceeds to the processing of subsequent S605 "calculate management-finance information" and S505 "calculate patent information".

At S605 and S505, the information processing means 380 performs processing for calculating the desired index of the user based on the management-finance information and patent information acquired at S604 and s504, and the calculating formula designated by the user.

When the operation processing of the index relating to management-finance information and patent information is ended at S605 and S505, the processing to be subsequently performed by the information processing means 380 proceeds to the processing of S606 "organize calculation result of management-finance information" and S506 "organize calculation result of patent information".

At S606 and S506, the information processing means 380 classifies the specified enterprise into a predetermined category based on the operation result of the index, and further performs operation processing for predetermined ranking or discrimination, and then organizes the various operation results. Incidentally, depending on the type of index to be calculated, there are certain indexes that do not require classification or ranking.

When the organization of the various operation results at S606 and S506 is ended, the processing to be subsequently performed by the information processing means 380 proceeds to the processing of S507 "create graph".

At S507, the information processing means 380 creates a chart or graph by applying the operation result of the patent information calculated at S505, various operation results organized at S506, operation result of the management-finance information operated at S605, or operation result of the various types of management-finance information organized at S606 into a display format according to the index or the operation result thereof, and coverts this into display data.

Next, at S508 "output graph", the information processing means 380 outputs the display data of the chart or graph created at S507 to the display interface 373, and displays this on the display means 372.

By the user perusing the chart or graph displayed at S508, the user will be able to easily know the enterprise value based on the market value in relation to the R&D cost made by the respective enterprises, competitive position relating to inventions, validity of the enterprise value, patent profitability, R&D cost ratio, market value added, and so on.

Depending on the items of enterprise evaluation designated by the user, there may be cases where the information processing means 380 performs a more detailed ranking in order to judge the enterprise value. In such a case, the information processing means 380 will read the predetermined threshold or the like at S509 "determine enterprise value" to judge the enterprise value, thereafter output the numerical value or graph thereof, and then end the calculation processing of the various indexes.

Industrial Applicability

According to the present invention, the total amount of gross operating profit (GBP) and patent royalty income ("total business profit" generated by an enterprise each year) is divided by the total number of effective patents to calculate and output the total business profit per effective patent. Therefore, it is possible to calculate and display an index showing the degree of contribution of effective patents or effective utility models in the profit of the enterprise. In general, enterprises that show a high value of the patent profitability are enterprises with a high rate of patent contribution to their profitability.

Further, according to the present invention, the patent profitability can be calculated by using the operating profit and R&D cost. Moreover, according to the present invention, the patent profitability can be calculated by using the sales profit, R&D cost included in the manufacturing cost, R&D cost included in the administrative expenses, and administrative expenses.

Further, according to the present invention, the excess value added amount per effective patent can be calculated and notified by dividing the total amount of "excess value added amount", which represents the portions exceeding the industry average among the total amount of value created in the respective enterprises, and "patent royalty income" by the "total number of effective patents". Moreover, according to the present invention, the "patent profitability" per effective patent can be calculated and notified by calculating based only on the portions exceeding the industry average among the total amount of value created by the respective enterprises (excess value added amount) and "patent royalty income". This index can be used for comparing the patent profitability in the same business category, and enterprises having an excess value added amount above the industry average can be represented with a positive value, and enterprises having an excess value added amount below the industry average can be represented with a negative value.

Further, according to the present invention, the patent profitability can be calculated by using the sales volume, ratio of value added amount to sales volume and average ratio of value added amount to sales volume. Moreover, according to the present invention, the patent profitability can be calculated by using the sales volume and value added amount.

Further, according to the present invention, the amount of excess total business profit per effective patent can be calculated and notified to the user by dividing the total amount of the "excess GBP" representing the portion exceeding the industry average among the business income obtained in the respective enterprises through manufacture/sale activities and "patent royalty income" by the "total number of effective patents". As a result of using this index, it is possible to compare the patent profitability in the same business category. Moreover, with this index, enterprises having a ratio of gross operating profit to sales volume above the industry average can be represented with a positive value, and enterprises having a ratio of gross operating profit to sales volume below the industry average can be represented with a negative value. Nevertheless, even if the excess gross operating profit is a negative value due to the ratio of gross operating profit below the industry average, if the "patent royalty income" is extremely high, there may be cases where the patent profitability index is calculated as a positive value.

Further, according to the present invention, the amount of excess earnings on intellectual asset per effective patent can be calculated and notified to the user by dividing the "excess earnings on intellectual asset (EXEOIA)" representing the portion exceeding the industry average among the amount of profit estimated to be generated in the respective enterprises based on off-balance intellectual assets (intangible assets not indicated in a balance sheet) by the total number of effective patents.

Further, since the patent profitability pertaining to the present invention is obtained by adding the patent royalty income to the portion exceeding the industry average value of the "earnings on intellectual asset", which is the balance after deducting the expected return to be obtained from on-balance assets (assets indicated in the balance sheet) from the total business profit, it is an effective method for estimating the "quality" of patents based on a macro approach using accounting information. In the case of this patent profitability index, enterprises having a return on intellectual asset above the industry average can be represented with a positive value, and enterprises having a return on intellectual asset below the industry average can be represented with a negative value. Moreover, according to the present invention, the patent profitability can be calculated by using the total assets, return on intellectual asset and average return on intellectual asset.

Further, the present invention calculate index of patent profitability $\alpha$ obtained through dividing the sum of said acquired gross operating profit and patent royalty income by said total number of effective patents, index of patent profitability $\beta$ obtained through dividing the sum of said acquired excess value added amount and patent royalty income by said total number of effective patents, index of patent profitability $\gamma$ obtained through dividing the sum of said acquired excess gross operating profit and patent royalty income by said total number of effective patents, or index of patent profitability $\delta$ obtained through dividing said acquired excess earnings on intellectual asset by said total number of effective patents for a plurality of enterprises; generate the display data for displaying, index by index and enterprise by enterprise, the patent profitability index of the plurality of enterprises; and output it to display means or the like. Therefore, it is possible to facilitate the visualization of the respective patent profitability indexes of $\alpha$, $\beta$, $\gamma$ and $\delta$ per enterprise. By

observing this display, it is possible to compare the patent profitability based on the gross operating profit, excess value added amount, excess gross operating profit, and excess intellectual property profit. Moreover, by comparing and observing the respective patent profitability indexes of $\alpha$, $\beta$, $\gamma$ and $\delta$ of the respective enterprises, it is possible to compare the profit per patent in the respective enterprises.

Further, according to the present invention, it is possible to associate and display the patent profitability and market value added. The value of the market value added (MVA) is obtained by deducting the amount of "stockholders' equity" from the "total market value (enterprise value evaluation amount)". An enterprise having a high market value as a result of its evaluation being reflected in its stock price can also be considered to have a high stock price, and, therefore, the user is able to observe how the value of patent profitability per effective patent among the total number of effective patents is reflected in the stock market and the like.

Further, according to the present invention, it is possible to display the relationship of the "patent profitability" and market value added (MVA) per effective patent by calculating based only on the portion exceeding the industry average among the generated added values (excess value added amount) and the patent royalty income.

Further, according to the present invention, it is possible to associate and display the patent profitability obtained through dividing the sum of the value exceeding the average gross operating profit in the industry and the patent royalty income by the total number of effective patents, and the market value added. Therefore, it is possible to research the relationship between the stock market evaluation or the like and how far the enterprise to be researched is positioned away from the average gross operating profit of the industry.

Further, according to the present invention, it is possible to associate and display and notify the user of the index capable of estimating the quality of patents with a macro-like approach and the market value added. Moreover, according to the present invention, by associating and displaying the index showing patent profitability and the index of market value added (MVA), it is possible to know to what degree the each effective patent is contributing to the market value added (MVA), and this is useful in evaluating the enterprise.

Further, according to the present invention, it is possible to calculate and notify the user of the relationship between the R&D cost ratio to total assets in the respective enterprises and the profit per effective patent calculated based on the gross operating profit, patent royalty income and total number of effective patents.

Further, according to the present invention, it is possible to calculate and notify the user of the relationship between the R&D cost ratio to total assets in the respective enterprises and the profit per effective patent calculated based on the excess value added amount, patent royalty income and total number of effective patents.

Further, according to the present invention, it is possible to calculate and notify the user of the relationship between the R&D cost ratio to total assets in the respective enterprises and the profit per effective patent calculated based on the excess gross operating profit, patent royalty income and total number of effective patents.

Further, according to the present invention, it is possible to calculate and notify the user of the relationship between the R&D cost ratio to total assets in the respective enterprises and the profit per effective patent calculated based on the excess earnings on intellectual asset and total number of effective patents.

According to the enterprise evaluation device and enterprise evaluation program pertaining to the present invention, it is possible to quantitatively and qualitatively incorporate the value of intangible assets to evaluate the validity of the enterprise value.

Further, according to the enterprise evaluation device and enterprise evaluation program pertaining to the present invention, when investing in stocks or the like of a specified enterprise, when jointly developing a product with a specified enterprise, or when wishing to be employed in a specified enterprise, it is possible to grasp the tendency or predict the potential per enterprise or technical field.

**Claims**

1. An enterprise evaluation device, comprising:

   management-finance information acquisition means for acquiring gross operating profit and patent royalty income, in a first specified period, of a specified enterprise from a management-finance database containing management-finance information of enterprises;
   gazette acquisition means for acquiring registration gazettes based on patent applications filed by a specified enterprise within a second specified period from a database;
   number-of-inventions acquisition means for acquiring the number of patents subjected to, before a predetermined time, registration or number of claims of the patents as the number of inventions from said acquired registration gazettes;
   number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired gross operating profit and patent royalty income by said total number of effective patents; and

output means for outputting said calculated patent profitability to display means, printing means, recording medium, or another telecommunications device via a communication line.

2. An enterprise evaluation device, comprising:

management-finance information acquisition means for acquiring operating profit and R&D cost, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating gross operating profit by adding the acquired operating profit and R&D cost in said first specified period, and calculating patent profitability through dividing the sum of said calculated gross operating profit and patent royalty income by said total number of effective patents; and

output means for outputting said calculated patent profitability to display means, printing means, recording medium, or another telecommunications device via a communication line.

3. An enterprise evaluation device, comprising:

management-finance information acquisition means for acquiring sales profit, R&D cost included in manufacturing costs, administrative expenses, and R&D cost included in the administrative expenses in a first specified period of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating gross operating profit by subtracting the administrative expenses from the sum of acquired sales profit, R&D cost included in manufacturing costs, and R&D cost included in administrative expenses in said first specified period, and calculating patent profitability through dividing the sum of said calculated gross operating profit and patent royalty income by said total number of effective patents; and

output means for outputting said calculated patent profitability to display means, printing means, recording medium, or another telecommunications device via a communication line.

4. An enterprise evaluation device, comprising:

management-finance information acquisition means for acquiring excess value added amount and patent royalty income in a first specified period of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the'patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess value added amount and patent royalty income by said total number of effective patents; and

output means for outputting said calculated patent profitability to display means, printing means, recording medium, or another telecommunications device via a communication line.

5. An enterprise evaluation device, comprising:

management-finance information acquisition means for acquiring sales volume and ratio of value added amount to sales volume, in a first specified period, of a specified enterprise, average ratio of value added amount to sales volume and patent royalty income from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating excess value added amount by multiplying the sales volume to a value obtained by subtracting the average ratio of value added amount to sales volume from said acquired ratio of value added amount to sales volume, and calculating patent profitability through dividing the sum of said calculated excess value added amount and patent royalty income by said total number of effective patents; and

output means for outputting said calculated patent profitability to display means, printing means, recording medium, or another telecommunications device via a communication line.

6. An enterprise evaluation device, comprising:

management-finance information acquisition means for acquiring sales volume and value added amount, in a first specified period, of a plurality of enterprises, and patent royalty income from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

ratio of value added amount to sales volume calculation means for calculating ratio of value added amount to sales volume of the specified enterprise through dividing said acquired value added amount of the specified enterprise by the sales volume of the specified enterprise, and calculating average ratio of value added amount to sales volume for a plurality of enterprises;

patent profitability calculation means for calculating excess value added amount by multiplying the sales volume to a value obtained by subtracting the average ratio of value added amount to sales volume from said ratio of value added amount to sales volume of the specified enterprise, and calculating patent profitability through dividing the sum of said calculated excess value added amount and patent royalty income by said total number of effective patents; and

output means for outputting said calculated patent profitability to display means, printing means, recording medium, or another telecommunications device via a communication line.

7.  An enterprise evaluation device, comprising:

management-finance information acquisition means for acquiring excess gross operating profit and patent royalty income, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess gross operating profit and patent royalty income by said total number of effective patents; and

output means for outputting said calculated patent profitability to display means, printing means, recording medium, or another telecommunications device via a communication line.

8.  An enterprise evaluation device, comprising:

management-finance information acquisition means for acquiring sales volume and ratio of gross operating profit, in a first specified period, of a specified enterprise, average ratio of gross operating profit and patent royalty income from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating excess gross operating profit by multiplying the sales volume to a value obtained by subtracting the average ratio of gross operating profit from said acquired ratio of gross operating profit, and calculating patent profitability through dividing the sum of said calculated excess gross operating profit and the patent royalty income by said total number of effective patents; and

output means for outputting said calculated patent profitability to display means, printing means, recording medium, or another telecommunications device via a communication line.

9.  An enterprise evaluation device, comprising:

management-finance information acquisition means for acquiring sales volume and gross operating profit, in a first specified period, of a plurality of enterprises, and patent royalty income from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

humber-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

ratio of gross operating profit to sales volume calculation means for calculating ratio of gross operating profit to sales volume of the specified enterprise through dividing said acquired gross operating profit of the specified enterprise by the sales volume of the specified enterprise, and calculating average ratio of gross operating profit to sales volume for the plurality of enterprises;

patent profitability calculation means for calculating excess gross operating profit by multiplying the sales volume to a value obtained by subtracting average ratio of gross operating profit to sales volume from said ratio of gross operating profit to sales volume of the specified enterprise, and calculating patent profitability through dividing the sum of said calculated excess gross operating profit and patent royalty income by said total number of effective patents; and

output means for outputting said calculated patent profitability to display means, printing means, recording medium, or another telecommunications device via a communication line.

**10.** An enterprise evaluation device, comprising:

management-finance information acquisition means for acquiring excess earnings on intellectual asset, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing said acquired excess earnings on intellectual asset by said total number of effective patents; and

output means for outputting said calculated patent profitability to display means, printing means, recording medium, or another telecommunications device via a communication line.

**11.** An enterprise evaluation device, comprising:

management-finance information acquisition means for acquiring total assets and return on intellectual asset, in a first specified period, of a specified enterprise, and average return on intellectual asset from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating excess earnings on intellectual asset by multiplying the total assets to a value obtained by subtracting the average return on intellectual asset from said acquired return on intellectual asset, and calculating patent profitability through dividing said calculated excess earnings on intellectual asset by said total number of effective patents; and

output means for outputting said calculated patent profitability to display means, printing means, recording medium, or another telecommunications device via a communication line.

**12.** An enterprise evaluation device, comprising:

management-finance information acquisition means for acquiring gross operating profit, excess value added amount, excess gross operating profit, excess earnings on intellectual asset or patent royalty income, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating index of patent profitability $\alpha$ obtained through dividing the sum of said acquired gross operating profit and patent royalty income by said total number of effective patents, index of patent profitability $\beta$ obtained through dividing the sum of said acquired excess value added amount and patent royalty income by said total number of effective patents, index of patent profitability $\gamma$ obtained through dividing the sum of said acquired excess gross operating.profit and patent royalty income by said total number of effective patents, or index of patent profitability $\delta$ obtained through dividing said acquired excess earnings on intellectual asset by said total number of effective patents for a plurality of.enterprises;

display data generation means for generating display data for displaying, index by index and enterprise by enterprise, the calculated patent profitability index of said plurality of enterprises; and

output means for outputting said display data to display means, printing means, ._recording medium, or another telecommunications device via a communication line.

13. An enterprise evaluation device, comprising:

management-finance information acquisition means for acquiring gross operatirig profit, patent royalty income and market value added, in a first specified period, of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired gross operating profit and patent royalty income by said total number of effective patents;

display data generation means for generating display data for associating and displaying said calculated patent profitability and said acquired market value added; and

output means for outputting said display data to display means, printing means, recording medium, or another telecommunications device via a communication line.

14. An enterprise evaluation device, comprising:

management-finance information acquisition means for_ acquiring excess value added amount, patent royalty income and market value added, in a first specified period, of a specified enterprise from a management-finance database containing'management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess value added amount and patent royalty income by said total number of effective patents;

display data generation means for generating display data for associating and displaying said calculated patent profitability and said acquired market value added; and
output means for outputting said display data to display means, printing means, recording medium, or another telecommunications device via a communication line.

**15.** An enterprise evaluation device, comprising:

management-finance information acquisition means for acquiring excess gross operating profit, patent royalty income and market value added, in a first specified period, of a specified enterprise from a management-finance database containing management-finance information of enterprises;
gazette acquisition means for acquiring registration gazettes based on patent applications filed by a specified enterprise within a second specified period from a database;
number-of-inventions acquisition means for acquiring the number of patents subjected to, before a predetermined time, registration or number of claims of the patents as the number of inventions from said acquired registration gazettes;
number-of-extinguished-inventions acquisition means for acquiring the number of extinguished inventions of patents extinguished before the predetermined time among said acquired number of inventions;
total number-of-effective-patents calculation means for calculating the total number of effective patents by subtracting the number of extinguished inventions from said acquired number of inventions;
patent profitability calculation means for calculating patent profitability through dividing the sum of said acquired excess gross operating profit and patent royalty income by said total number of effective patents;
display data generation means for generating display data for associating and displaying said calculated patent profitability and said acquired market value added; and
output means for outputting said display data to display means, printing means, recording medium, or another telecommunications device via a communication line.

**16.** An enterprise evaluation device, comprising:

management-finance information acquisition means for acquiring excess earnings on intellectual asset and market value added, in a first specified period, of a specified enterprise from a management-finance database containing management-finance information of enterprises;
gazette acquisition means for acquiring registration gazettes based on patent applications filed by a specified enterprise within a second specified period from a database;
number-of-inventions acquisition means for acquiring the number of patents subjected to, before a predetermined time, registration or number of claims of the patents as the number of inventions from said acquired registration gazettes;
number-of-extinguished-inventions acquisition means for acquiring the number of extinguished inventions of patents extinguished before the predetermined time among said acquired number of inventions;
total number-of-effective-patents calculation means for calculating the total number of effective patents by subtracting the number of extinguished inventions from said acquired number of inventions;
patent profitability calculation means for calculating patent profitability through dividing said acquired excess earnings on intellectual asset by said total number of effective patents;
display data generation means for generating display data for associating and displaying said calculated patent profitability and said acquired market value added; and
output means for outputting said display data to display means, printing means, recording medium, or another telecommunications device via a communication line.

**17.** An enterprise evaluation device, comprising:

management-finance information acquisition means for acquiring R&D cost in a first specified period and gross operating profit, patent royalty income and total assets in a second specified period of a specified enterprise from a management-finance database containing management-finance information of enterprises;
gazette acquisition means for acquiring registration gazettes based on patent applications filed by a specified enterprise within a third specified period from a database;
number-of-inventions acquisition means for acquiring the number of patents subjected to, before a predetermined time, registration or number of claims of the patents as the number of inventions from said acquired registration gazettes;
number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired gross operating profit and patent royalty income by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means, printing means, recording medium, or another telecommunications device via a communication line.

18. An enterprise evaluation device, comprising:

management-finance information acquisition means for acquiring R&D cost in a first specified period and excess value added amount, patent royalty income and total assets in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess value added amount and patent royalty income by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means, printing means, recording medium, or another telecommunications device via a communication line.

19. An enterprise evaluation device, comprising:

management-finance information acquisition means for acquiring R&D cost in a first specified period and excess gross operating profit, patent royalty income and total assets in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing the sum of said acquired excess gross operating profit and patent royalty income by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means, printing means, recording medium, or another telecommunications device via a communication line.

20. An enterprise evaluation device, comprising:

management-finance information acquisition means for acquiring R&D cost in a first specified period and excess earnings on intellectual asset and total assets in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

patent profitability calculation means for calculating patent profitability through dividing said acquired excess earnings on intellectual asset by said total number of effective patents;

R&D cost ratio calculation means for calculating R&D cost ratio through dividing said acquired R&D cost by the total assets;

display data generation means for generating display data for associating and displaying said calculated patent profitability and said calculated R&D cost ratio; and

output means for outputting said display data to display means, printing means, recording medium, or another telecommunications device via a communication line.

21. The enterprise evaluation device according to any one of claims 1 to 20,
wherein said registration gazettes include patent registration gazettes, publications of examined patent applications, publications of examined utility model applications or utility model registration gazettes; and
wherein, when the registered gazettes are utility model gazettes, said patent application refers to a utility model application, and said patent subjected to registration refers to a utility model subjected to registration.

22. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means, wherein said information processing means realizes:

a function for causing said management-finance information acquisition means to acquire gross operating profit and patent royalty income, in a first specified period, of a specified enterprise from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired gross operating profit and patent royalty income by said total number of effective patents; and

a function for causing said output means to output said calculated patent profitability to display means, printing means, recording medium, or another telecommunications device via a communication line.

**23.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means, wherein said information processing means realizes:

a function for causing said management-finance information acquisition means to acquire operating profit and R&D cost, in a first specified period, of a specified enterprise from the management-finance database containing the management-finance information of enterprises;
a function for causing said gazette acquisition means to acquire the registration gazettes based on patent applications filed by a specified enterprise within a second specified period from the database;
a function for causing said number-of-inventions acquisition means to acquire the number of patents subjected to, before a predetermined time, registration or number of claims of the patents as the number of inventions from said acquired registration gazettes;
a function for causing said number-of-extinguished-inventions acquisition means to acquire the number of extinguished inventions of patents extinguished before the predetermined time among said acquired number of inventions;
a function for causing said total number-of-effective-patents calculation means to calculate the total number of effective patents by subtracting the number of extinguished inventions from said acquired number of inventions;
a function for causing said patent profitability calculation means to calculate gross operating profit by adding the acquired operating profit and R&D cost in said first specified period, and calculate the patent profitability through dividing the sum of said calculated gross operating profit and patent royalty income by said total number of effective patents; and
a function for causing said output means to output said calculated patent profitability to display means, printing means, recording medium, or another telecommunications device via a communication line.

**24.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means, wherein said information processing means realizes:

a function for causing said management-finance information acquisition means to acquire sales profit, R&D cost included in manufacturing costs, administrative expenses, and R&D cost included in the administrative expenses in a first specified period of a specified enterprise from the management-finance database containing the management-finance information of enterprises;
a function for causing said gazette acquisition means to acquire the registration gazettes based on patent applications filed by a specified enterprise within a second specified period from the database;
a function for causing said number-of-inventions acquisition means to acquire the number of patents subjected to, before a predetermined time, registration or number of claims of the patents as the number of inventions from said acquired registration gazettes;
a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions; a function for causing said patent profitability calculation means to calculate gross operating profit by subtracting the administrative expenses from the sum of acquired sales profit, R&D cost included in manufacturing costs, and R&D cost included in administrative expenses in said first specified period, and calculate the patent profitability through dividing the sum of said calculated gross operating profit and patent royalty income by said total number of effective patents; and

a function for causing said output means to output said calculated patent profitability to display means, printing means, recording medium, or another telecommunications device via a communication line.

25. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means, wherein said information processing means realizes:

a function for causing said management-finance information acquisition means to acquire excess value added amount and patent royalty income in a first specified period of a specified enterprise from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired excess value added amount and patent royalty income by said total number of effective patents; and

a function for causing said output means to output said calculated patent profitability to display means, printing means, recording medium, or another telecommunications device via a communication line.

26. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means, wherein said information processing means realizes:

a function for causing said management-finance information acquisition means to acquire sales volume and ratio of value added amount to sales volume, in a first specified period, of a specified enterprise, average ratio of value added amount to sales volume and patent royalty income from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate excess value added amount by multiplying the sales volume to a value obtained by subtracting the average ratio of value added amount to sales volume from said acquired ratio of value added amount to sales volume, and calculate the patent profitability through dividing the sum of said calculated excess value added amount and patent royalty income by said total number of effective patents; and

a function for causing said output means to output said calculated patent profitability to display means, printing means, recording medium, or another telecommunications device via a communication line.

27. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, ratio of value added amount to sales volume calculation means for calculating ratio of value added amount to sales volume, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, ratio of value added amount to sales volume calculation means, patent profitability calculation means and output means,

wherein said information processing means realizes:

a function for causing said management-finance information acquisition means to acquire sales volume and value added amount, in a first specified period, of a plurality of enterprises, and patent royalty income from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said ratio of value added amount to sales volume calculation means to calculate the ratio of value added amount to sales volume of the specified enterprise through dividing said acquired value added amount of the specified enterprise by the sales volume of the specified enterprise, and calculate average ratio of value added amount to sales volume for a plurality of enterprises;

a function for causing said patent profitability calculation means to calculate excess value added amount by multiplying the sales volume to a value obtained by subtracting the average ratio of value added amount to sales volume from said ratio of value added amount to sales volume of the specified enterprise, and calculate the patent profitability through dividing the sum of said calculated excess value added amount and patent royalty income by said total number of effective patents; and

a function for causing said output means to output said calculated patent profitability to display means, printing means, recording medium, or another telecommunications device via a communication line.

**28.** An enterprise evaluation program which realizes:

a function for causing said management-finance information acquisition means to acquire excess gross operating profit and patent royalty income, in a first specified period, of a specified enterprise from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired excess gross operating profit and patent royalty income by said total number of effective patents; and

a function for causing said output means to output said calculated patent profitability to display means, printing means, recording medium, or another telecommunications device via a communication line.

**29.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output.means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means, wherein said information processing means realizes:

a function for causing said management-finance information acquisition means to acquire sales volume and ratio of gross operating profit, in a first specified period, of a specified enterprise, average ratio of gross operating profit and patent royalty income from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate excess gross operating profit by multiplying the sales volume to a value obtained by subtracting the average ratio of gross operating profit from said acquired ratio of gross operating profit, and calculate the patent profitability through dividing the sum of said calculated excess gross operating profit and the patent royalty income by said total number of effective patents; and

a function for causing said output means to output said calculated patent profitability to display means, printing means, recording medium, or another telecommunications device via a communication line.

**30.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, ratio of gross operating profit to sales volume calculation means for calculating ratio of gross operating profit to sales volume, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, ratio of gross operating profit to sales volume calculation means, patent profitability calculation means and output means,
wherein said information processing means realizes:

a function for causing said management-finance information acquisition means to acquire sales volume and gross operating profit, in a first specified period, of a plurality of enterprises, and patent royalty income from the management-finance database containing the management-finance information of enterprises;
a function for causing said gazette acquisition means to acquire the registration gazettes based on patent applications filed by a specified enterprise within a second specified period from the database;
a function for causing said number-of-inventions acquisition means to acquire the number of patents subjected to, before a predetermined time, registration or number of claims of the patents as the number of inventions from said acquired registration gazettes;
a function for causing said number-of-extinguished-inventions acquisition means to acquire the number of extinguished inventions of patents extinguished before the predetermined time among said acquired number of inventions;
a function for causing said total number-of-effective-patents calculation means to calculate the total number of effective patents by subtracting the number of extinguished inventions from said acquired number of inventions;
a function for causing said ratio of gross operating profit to sales volume calculation means to calculate the ratio of gross operating profit to sales volume of the specified enterprise through dividing said acquired gross operating profit of the specified enterprise by the sales volume of the specified enterprise, and calculate average ratio of gross operating profit to sales volume for the plurality of enterprises;
a function for causing said patent profitability calculation means to calculate excess gross operating profit by multiplying the sales volume to a value obtained by subtracting average ratio of gross operating profit to sales volume from said ratio of gross operating profit to sales volume of the specified enterprise, and calculate the patent profitability through dividing the sum of said calculated excess gross operating profit and patent royalty income by said total number of effective patents; and
a function for causing said output means to output said calculated patent profitability to display means, printing means, recording medium, or another telecommunications device via a communication line.

**31.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means,
wherein said information processing means realizes:

a function for causing said management-finance information acquisition means to acquire excess earnings on intellectual asset, in a first specified period, of a specified enterprise from the management-finance database containing the management-finance information of enterprises;
a function for causing said gazette acquisition means to acquire the registration gazettes based on patent applications filed by a specified enterprise within a second specified period from the database;
a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing said acquired excess earnings on intellectual asset by said total number of effective patents; and

a function for causing said output means to output said calculated patent profitability to display means, printing means, recording medium, or another telecommunications device via a communication line.

32. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, output means for outputting the patent profitability to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means and output means, wherein said information processing means realizes:

a function for causing said management-finance information acquisition means to acquire total assets and return on intellectual asset, in a first specified period, of a specified enterprise, and average return on intellectual asset from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate excess earnings on intellectual asset by multiplying the total assets to a value obtained by subtracting the average return on intellectual asset from said acquired return on intellectual asset, and calculate the patent profitability through dividing said calculated excess earnings on intellectual asset by said total number of effective patents; and

a function for causing said output means to output said calculated patent profitability to display means, printing means, recording medium, or another telecommunications device via a communication line.

33. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, display data generation means and output means, wherein said information processing means realizes:

a function for causing said management-finance information acquisition means to acquire gross operating profit, excess value added amount, excess gross operating profit, excess earnings on intellectual asset or patent royalty income, in a first specified period, of a specified enterprise from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate index of patent profitability $\alpha$ obtained through dividing the sum of said acquired gross operating profit and patent royalty income by said total number of effective patents, index of patent profitability $\beta$ obtained through dividing the sum of said acquired excess value added amount and patent royalty income by said total number of effective patents, index of patent profitability $\gamma$ obtained through dividing the sum of said acquired excess gross operating profit and patent royalty income by said total number of effective patents, or index of patent profitability $\delta$ obtained through dividing said acquired excess earnings on intellectual asset by said total number of effective patents for a plurality of enterprises;

a function for causing said display data generation means to generate the display data for displaying, index by index and enterprise by enterprise, the calculated patent profitability index of said plurality of enterprises; and

a function for causing said output means to output said display data to display means, printing means, recording medium, or another telecommunications device via a communication line.

**34.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, display data generation means and output means, wherein said information processing means realizes:

a function for causing said management-finance information acquisition means to acquire gross operating profit, patent royalty income and market value added, in a first specified period, of a specified enterprise from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired gross operating profit and patent royalty income by said total number of effective patents;

a function for causing said display data generation means to generate the display data for associating and displaying said calculated patent profitability and said acquired market value added; and
a function for causing said output means to output said display data to display means, printing means, recording medium, or another telecommunications device via a communication line.

**35.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, display data generation means and output means,
wherein said information processing means realizes:

a function for causing said management-finance information acquisition means to acquire excess value added amount, patent royalty income and market value added, in a first specified period, of a specified enterprise from the management-finance database containing the management-finance information of enterprises;
a function for causing said gazette acquisition means to acquire the registration gazettes based on patent applications filed by a specified enterprise within a second specified period from the database;
a function for causing said number-of-inventions acquisition means to acquire the number of patents subjected to, before a predetermined time, registration or number of claims of the patents as the number of inventions from said acquired registration gazettes;
a function for causing said number-of-extinguished-inventions acquisition means to acquire the number of extinguished inventions of patents extinguished before the predetermined time among said acquired number of inventions;
a function for causing said total number-of-effective-patents calculation means to calculate the total number of effective patents by subtracting the number of extinguished inventions from said acquired number of inventions;
a function for causing said patent profitability calculation means to calculate the patent profitability through dividing the sum of said acquired excess value added amount and patent royalty income by said total number of effective patents;
a function for causing said display data generation means to generate the display data for associating and displaying said calculated patent profitability and said acquired market value added; and
a function for causing said output means to output said display data to display means, printing means, recording medium, or another telecommunications device via a communication line.

**36.** An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, display data generation means and output means,
wherein said information processing means realizes:

a function for causing said management-finance information acquisition means to acquire excess gross operating profit, patent royalty income and market value added, in a first specified period, of a specified enterprise from the management-finance database containing the management-finance information of enterprises;
a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired excess gross operating profit and patent royalty income by said total number of effective patents;

a function for causing said display data generation means to generate the display data for associating and displaying said calculated patent profitability and said acquired market value added; and

a function for causing said output means to output said display data to display means, printing means, recording medium, or another telecommunications device via a communication line.

37. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, display data generation means and output means,

wherein said information processing means realizes:

a function for causing said management-finance information acquisition means to acquire excess earnings on intellectual asset and market value added, in a first specified period, of a specified enterprise from the management-finance database containing the management-finance information of enterprises;

a function for causing said gazette acquisition means to acquire the registration gazettes based on patent applications filed by a specified enterprise within a second specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing said acquired excess earnings on intellectual asset by said total number of effective patents;

a function for causing said display data generation means to generate the display data for associating and displaying said calculated patent profitability and said acquired market value added; and

a function for causing said output means to output said display data to display means, printing means, recording medium, or another telecommunications device via a communication line.

38. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, R&D cost ratio calculation means for calculating R&D cost ratio, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, R&D cost ratio calculation means, display data generation means and output means,

wherein said information processing means realizes:

a function for causing said management-finance information acquisition means to acquire R&D cost in a first specified period and gross operating profit, patent royalty income and total assets in a second specified period of a specified enterprise from the management-finance database containing the management-finance information of enterprises;

a function for causing said gazette acquisition means to acquire the registration gazettes based on patent applications filed by a specified enterprise within a third specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired gross operating profit and patent royalty income by said total number of effective patents;

a function for causing said R&D cost ratio calculation means to calculate the R&D cost ratio through dividing said acquired R&D cost by the total assets;

a function for causing said display data generation means to generate the display data for associating and displaying said calculated patent profitability and said calculated R&D cost ratio; and

a function for causing said output means to output said display data to display means, printing means, recording medium, or another telecommunications device via a communication line.

39. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, R&D cost ratio calculation means for calculating R&D cost ratio, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, R&D cost ratio calculation means, display data generation means and output means,

wherein said information processing means realizes:

a function for causing said management-finance information acquisition means to acquire R&D cost in a first specified period and excess value added amount, patent royalty income and total assets in a second specified period of a specified enterprise from the management-finance database containing the management-finance information of enterprises;

a function for causing said gazette acquisition means to acquire the registration gazettes based on patent applications filed by a specified enterprise within a third specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired excess value added amount and patent royalty income by said total number of effective patents;

a function for causing said R&D cost ratio calculation means to calculate the R&D cost ratio through dividing said acquired R&D cost by the total assets;

a function for causing said display data generation means to generate the display data for associating and displaying said calculated patent profitability and said calculated R&D cost ratio; and

a function for causing said output means to output said display data to display means, printing means, recording medium, or another telecommunications device via a communication line.

40. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, R&D cost ratio calculation means for calculating R&D cost ratio, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, R&D cost ratio calculation means, display data generation means and output means, wherein said information processing means realizes:

a function for causing said management-finance information acquisition means to acquire R&D cost in a first specified period and excess gross operating profit, patent royalty income and total assets in a second specified period of a specified enterprise from the management-finance database containing the management-finance information of enterprises;

a function for causing said gazette acquisition means to acquire the registration gazettes based on patent applications filed by a specified enterprise within a third specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing the sum of said acquired excess gross operating profit and patent royalty income by said total number of effective patents;

a function for causing said R&D cost ratio calculation means to calculate the R&D cost ratio through dividing said acquired R&D cost by the total assets;

a function for causing said display data generation means to generate the display data for associating and displaying said calculated patent profitability and said calculated R&D cost ratio; and

a function for causing said output means to output said display data to display means, printing means, recording medium, or another telecommunications device via a communication line.

41. An enterprise evaluation program to be executed by information processing means of an enterprise evaluation device comprising management-finance information acquisition means for acquiring management-finance information of enterprises from a management-finance database, gazette acquisition means for acquiring registration gazettes based on patent applications from a database, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents, patent profitability calculation means for calculating patent profitability, R&D cost ratio calculation means for calculating R&D cost ratio, display data generation means for generating display data, output means for outputting said display data to display means or the like, and information processing means capable of controlling said management-finance information acquisition means, gazette acquisition means, number-of-inventions acquisition means, number-of-extinguished-inventions acquisition means, total number-of-effective-patents calculation means, patent profitability calculation means, R&D cost ratio calculation means, display data generation means and output means,

wherein said information processing means realizes:

a function for causing said management-finance information acquisition means to acquire R&D cost in a first specified period and excess earnings on intellectual asset and total assets in a second specified period of a specified enterprise from the management-finance database containing the management-finance information of enterprises;

a function for causing said gazette acquisition means to acquire the registration gazettes based on patent applications filed by a specified enterprise within a third specified period from the database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said patent profitability calculation means to calculate the patent profitability through dividing said acquired excess earnings on intellectual asset by said total number of effective patents;

a function for causing said R&D cost ratio calculation means to calculate the R&D cost ratio through dividing said acquired R&D cost by the total assets;

a function for causing said display data generation means to generate the display data for associating and displaying said calculated patent profitability and said calculated R&D cost ratio; and

a function for causing said output means to output said display data to display means, printing means, recording medium, or another telecommunications device via a communication line.

42. The enterprise evaluation program according to any one of claims 22 to 41,
wherein said registration gazettes include patent registration gazettes, publications of examined patent applications, publications of examined utility model applications or utility model registration gazettes; and
wherein, when the registered gazettes are utility model gazettes, said patent application refers to a utility model application, and said patent subjected to registration refers to a utility model subjected to registration.

FIG. 1

FIG. 2

## FIG. 3

### (a) MANAGEMENT-FINANCE INFORMATION

| (A) Information on Size of Company | (B) Financial Information of Company | | (C) Combined Information of Company |
|---|---|---|---|
| Number of employees | Sales volume | Total assets | Sales volume per employee |
| Number of officers | Sales profit | Tangible fixed assets | R&D cost per employee |
| Capital | Operating profit | Amount of capital investment | Sales profit per employee |
| Number of plants/offices | Gross operating profit | Depreciation costs | Operating profit per employee |
| Ground floor area | Sales profit ratio | Patent royalty income | Gross operating profit per employee |
| Total floor area | Operating profit ratio | Financial assets (liquid assets and liquid liabilities) | |
| Ownership ratio of premises | Gross operating profit ratio | Interests paid/discounts | |
| Ownership ratio of building | Total market value to total assets ratio | Long-term prime rate (long-term borrowing rate) | |
| Number of employees (consolidated basis) | Total market value to stockholders' equity ratio | Short-term prime rate | |
| Number of officers (consolidated basis) | Total market value to sales volume ratio | Interest on bonds | |
| Capital (consolidated basis) | Total market value to gross operating profit ratio | 10-year government bond yield ratio | |
| Number of plants/offices (consolidated basis) | Total market value to operating profit ratio | Personnel costs, (including officers' compensation and labor costs) | |
| Ground floor area (consolidated basis) | Gross operating profit to total assets ratio | Welfare expenses | |
| Total floor area (consolidated basis) | Gross operating profit to stockholders' equity ratio | Capital stock | |
| Ownership ratio of premises (consolidated basis) | Operating profit to total assets ratio | Total number of outstanding shares | |
| Ownership ratio of building (consolidated basis) | Operating profit to Stockholders' equity ratio | Stock price (Nikkei Stock Average) | |
| | Stockholders' equity ratio | Taxes and public charges | |
| | Balance of total market value and stockholders' equity | | |
| | R&D cost | | |
| | R&D cost to sales volume ratio | | |
| | R&D cost to operating profit ratio | | |
| | R&D cost to gross operating profit ratio | | |

FIG. 4A

(b) PATENT INFORMATION

| (A) Application Related Matters | |
|---|---|
| Filing date | Number of filings |
| Application number | Number of request for examination |
| Title of the invention | Number of filings based on IPC |
| Inventors | Number of filings based on keywords |
| Applicants | Number of claims filed |
| Scope of claims | Years spent on examination requests |
| Abstract | Number of inventors |
| IPC | Number of applicants (number of joint applications) |
| FI | Number of domestic priority-claiming applications |
| F term | Number of domestic priority bases claimed in applications |
| Agents | Number of priority bases from foreign countries |
| Publication date | Number of applications in which an exception to loss of novelty is requested |
| Publication number | Number of applications in which examination is requested before laid-open |
| Existence of request for examination | Number of divisional applications |
| Date of request for examination | Number of withdrawn/abandoned applications |
| Priority date | Number of converted applications |
| Priority number | Number of expedited examinations |
| Date of publication of translations of PCT international application | Number of filings (in each country) |
| Number for publication of translations of PCT international application | Number of inventors in applications (in each country) |
| Date of domestic re-publication of PCT international application | Number of applicants in applications (in each country) |
| Number for domestic re-publication of PCT international application | Number of priority-claiming applications (in each country) |
| International filing date | Number of priority bases claimed in applications (in each country) |
| International application number | Number of divisional applications (in each country) |
| International publication date | |
| International publication number | |
| Designated countries | |

## FIG. 4B

(b) PATENT INFORMATION

| (B) Registration Related Matters | |
|---|---|
| Registration date | Number of registrations |
| Issue date of registration | Number of claims registered |
| Registration number | Number of expired patents after registration |
| Scheduled day of expiration of right | Years spent from application to registration |
| Date of publication of examined application | Patent registration rate |
| Publication number of examined application | Patent allowance rate |
| Annual maintenance fee payment status | Years spent from request for examination to registration |
| Number of final decisions for rejection | Number of applications in which preferential examination is conducted |
| Date of final decision for rejection | Number of rejections issued |
| Number of claims decided to be finally rejected | Number of amendments filed |
| Number of appeals against final decision for rejection | Number of amendments filed (for formalities) |
| number of abandoned/withdrawn applications after request for examination | Number of written oppositions filed |
| Number of abandoned/withdrawn claims after request for examination | Number of appeals and trials |
| Number of invalidation trials | Number of registrations for creating patent right |
| Appeal/trial number | Number of registrations for extending term of patent right |
| Date of decision to appeal/trial | Number of transferred patents |
| Number of claims demanded for invalidation trial | Number of registrations (in each country) |
| Number of appeals to dismissal of amendment or trials for correction | Years required for registration (in each country) |
| Number of oppositions | Years spent on examination (in each country) |
| Number of claims demanded for opposition | Number of rejections issued (in each country) |
| Inventors of registered patent | Number of amendments filed (in each country) |
| Number of inventors of registered patent | Number of amendments filed (for formalities) (in each country) |
| Applicants of registered patent | Number of oppositions filed (in each country) |
| References cited | Number of applications in which preferential examination is conducted |
| | Number of rejections issued |
| | |

FIG. 5
EP 1 686 514 A1

"PATENT QUARTERLY JOURNAL" INDEX LIST OF ENTERPRISE VALUE EVALUATION SYSTEM

A: Business, Profit and Market Value Related Index (1)

| Index Group | Index | Formula |
|---|---|---|
| (A) Investment | Facility Investment Amount | {(Current Term Tangible Fixed Assets - Previous Term Tangible Fixed Assets)} + (Current Term Depreciation Cost) |
| | R&D Cost | Total Amount of R&D Cost |
| | Investment Trend Index | Term-on-Term Ratio of {(Facility Investment Amount) + (R&D Cost)} |
| (B) Management/Finance Analysis | Facility Investment Efficiency | (Value Added Amount)/(Tangible Fixed Assets) |
| | Labor Productivity | (Value Added Amount)/(Number of Employees) |
| | Labor Equipment Ratio | (Tangible Fixed Assets)/(Number of Employees) |
| | Labor Distribution Share | {(Personnel Expense to be Included in Selling Cost and Administrative Expenses) + (Labor Cost to be Included in Manufacturing Cost)}/(Value Added Amount) |
| | Total Factor Productivity | (Value Added Amount Rate of Change) - {(1 - Labor Distribution Share (To Value Added)) × (Depreciation Target Tangible Fixed Assets Rate of Change)} - {(Labor Distribution Share (To Value Added)) × (Number of Employees Rate of Change)} |
| | Cost-to-Sales Ratio | (Cost of Sales)/(Sales Volume) |
| | Cost of Sales-and-Administration Ratio to Sales | (Selling Cost and Administrative Expenses)/(Sales Volume) |
| | Interest Bearing Debt Ratio | (Interest Bearing Debt)/(Total Assets) |
| | Equity to Asset Ratio | (Equity Capital)/(Total Assets) |
| (C) Profit Related Items | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues). (Operating Net Profit) = (Operating Profit) - (Interest Paid and Discount) |
| | Gross Operating Profit (GBP) | (Operating Profit) + (R&D Cost) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA α | {(Value Added Amount) + (Patent Royalty Income)}/(Total Assets) |
| | ROA β | {(GBP) + (Patent Royalty Income)}/(Total Assets) |
| | ROA γ | {(EBITDA) + (Patent Royalty Income)}/(Total Assets) |
| | ROA δ | {(Operating Profit) + (Patent Royalty Income)}/(Total Assets) |
| | Earnings on Intellectual Assets (EOIA) | {(GBP) + (Patent Royalty Income)} - {(Financial Assets) × (Profit Ratio m)} + {(Tangible Fixed Assets) × (Profit Ratio f)} (Profit Ratio m): Application of Short Term Prime Rate; (Profit Ratio f): Application of Long Term Prime Rate |
| | Return On Intellectual Assets (ROIA) | (Earnings on Intellectual Assets)/(Total Assets) |

FIG. 6

EP 1 686 514 A1

"PATENT QUARTERLY JOURNAL" INDEX LIST OF ENTERPRISE VALUE EVALUATION SYSTEM

A: Business, Profit and Market Value Related Index (2)

| Index Group | Index | Formula |
|---|---|---|
| (D) Excess Profit Analysis | Excess Value Added Amount | Sales Volume × {(Sales Volume Value Added Ratio) - (Industry Average Sales Volume Value Added Ratio)} |
| | Excess GBP | Sales Volume × {(Sales Volume GBP Ratio) - (Industry Average Sales Volume GBP Ratio)} |
| | Excess EBITDA | Sales Volume × {(Sales Volume EBITDA Ratio) - (Industry Average Sales Volume EBITDA Ratio)} |
| | Excess Operating Profit | Sales Volume × {(Operating Profit Ratio (To Sales)) - (Industry Average Operating Profit Ratio (To Sales))} |
| | Excess ROA $\alpha$ | (ROA $\alpha$) - (Industry Average ROA $\alpha$) |
| | Excess ROA $\beta$ | (ROA $\beta$) - (Industry Average ROA $\beta$) |
| | Excess ROA $\gamma$ | (ROA $\gamma$) - (Industry Average ROA $\gamma$) |
| | Excess ROA $\delta$ | (ROA $\delta$) - (Industry Average ROA $\delta$) |
| | Excess Earnings on Intellectual Assets (EXEOIA) | (Net Assets) × {(Ratio of Earnings on Intellectual Assets) - (Industry Average of Ratio of Earnings on Intellectual Assets) |
| (M) Market Evaluation Related Items | MVA | (Value of Stock) - (Shareholders' Equity)   (Value of Stock) = (Total Number of Outstanding Stock) × (Stock Price) |
| | PBR | (Value of Stock)/(Equity Capital) |
| | Expected Intellectual Property Profit | {(Fixed Liabilities) × (Profit Ratio a) + (Value of Stock) × (Profit Ratio p)} - {(Financial Assets) × (Profit Ratio m) + (Tangible Fixed Assets) × (Profit Ratio f)} ) (Profit Ratio a): (Weighted Average of Long Term Prime Rate and Bond Rate) × (1 - Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |
| (PE) Patent Profitability Related Items | Patent Profitability $\alpha$ | {(GBP) + (Patent Royalty Income)}/(Total Number of Effective Patents) |
| | Patent Profitability $\beta$ | {(Excess Value Added) + (Patent Royalty Income)}/(Total Number of Effective Patents) |
| | Patent Profitability $\gamma$ | {(Excess GBP) + (Patent Royalty Income)}/(Total Number of Effective Patents) |
| | Patent Profitability $\delta$ | (Excess Earnings on Intellectual Assets (EXEOIA))/(Total Number of Effective Patents) |

FIG. 7

EP 1 686 514 A1

"PATENT QUARTERLY JOURNAL" INDEX LIST OF ENTERPRISE VALUE EVALUATION SYSTEM

B: R&D and Patent Related Index (1)

| Index Group | Index | Formula |
|---|---|---|
| (R) R&D Related Items | R&D Cost Ratio $\alpha$ | (R&D Cost)/(Sales Volume) |
| | R&D Cost Ratio $\beta$ | (R&D Cost)/(Value Added Amount) |
| | R&D Cost Ratio $\gamma$ | (R&D Cost)/(GBP) |
| | R&D Cost Ratio $\delta$ | (R&D Cost)/(Total Assets) |
| | Number of Inventors | (Calculated Based on "Inventor" Column of Laid-Open Publications) |
| | Ratio of Inventors | (Number of Inventors)/(Number of Employees) |
| | R&D Cost per Inventor | (R&D Cost)/(Number of Inventors) |
| (PA) Patent Application Related Items | Number of Patent Applications | (Joint Application is Recorded as One Application) |
| | Number of Claims Filed | (Sum of Number of Claims of Laid-Open Publications) |
| | Number of Claims per Patent Application | (Number of Claims Filed)/(Number of Patent Applications) |
| | Number of application per Inventor | (Number of Patent Applications (Other Than Joint Applications))/(Number of Inventors) |
| | Number of Claims per Inventor (Patent Application) | (Number of Claims Filed (Other Than Joint Applications))/(Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint | (Number of Joint Applicants in Joint Applications) |
| | Patent Application Stock | (Cumulative Number of Patent Applications) |
| (PB) Examination Request Related Items | Number of Examination Requests | (Number of Examination Requests Filed) |
| | Years to Examination Request (Average) | [ $\Sigma$ (Date of Examination Request - Filing Date)]/[(Number of Examination Requests)×(Annual Number of Days)] |
| | Examination Request Ratio | (Examination Request Ratio Pertaining to Number of Patent Applications of Each Year) |
| | Cumulative Number of Examination Requests | (Cumulative Number of Examination Requests) |

FIG. 8

"PATENT QUARTERLY JOURNAL" INDEX LIST OF ENTERPRISE VALUE EVALUATION SYSTEM

B: R&D and Patent Related Index (2)

| Index Group | Index | Formula |
|---|---|---|
| (PT) Patent Acquisition (Registration) Related Items | Number of Patents Granted | (Number of Patents Granted) |
| | Number of Claims Registered | (Number of "Claims" in Registered Gazette) |
| | Years to Patent Granted (Average) | { Σ (Patent Registration Date - Patent Filing Date)}/{(Number of Patents Granted)×(Annual Number of Days)} |
| | Patent Granted Ratio to Number of Applications | (Number of Patents Granted Each Year)/(Number of Patent Applications Filed Each Year) |
| | Patent Granted Stock | (Patent Granted Stock at End of Each Year) |
| | Patent Granted Ratio to Number of Examination Requests | (Number of Patents Granted Each Year)/(Number of Examination Requests Filed Each Year) |
| | Patent Granted Stock Ratio to Examination Request Stock | (Patent Granted Stock)/(Cumulative Number of Examination Requests) |
| | Number of Effective Patents Granted | (Number of Patents Granted Each Year) - (Number of Patents Invalidated Among Patent Registrations Each Year) |
| (PP) Patent Productivity | Patent Application Productivity | (Number of Claims of Patent Applications in a year)/(R&D Cost in a previous year) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Required Years to Patent Granted) |
| (PS) Patent Stock Related Items | Total Number of Effective Patents | (Patent Granted Stock) - (Patent Invalidation Stock) |
| | Patent Granted Renewal Ratio | (Total Number of Effective Patents)/(Patent Granted Stock) |
| | Years to Renewal Patent Granted Expiration (Average) | { Σ (Scheduled Invalidation Date of Each Patent of the Total Number of Effective Patents - Year End)}/{(Total Number of Effective Patents) × (Annual Number of Days)} |
| | Patent Stock Index | (Total Number of Effective Patents) × (Years to Renewal Patent Granted Expiration (Average)) |
| | Total Patent Assets | {(R&D Cost)/(Number of Patents Granted)} ×(Total Number of Effective Patents) |

EP 1 686 514 A1

FIG. 9

EP 1 686 514 A1

"PATENT QUARTERLY JOURNAL" INDEX LIST OF ENTERPRISE VALUE EVALUATION SYSTEM

C: Patent Portfolio Related Index

| Index Group | Index | Formula |
|---|---|---|
| (PAP) Patent Application Portfolio analysis | Patent Application Portfolio analysis | (Power of Number of Claims Share Per Technical Field)　(Share: Share of Each Technical Field in an Enterprise or Share of each Enterprise in All Enterprises in a Technical Field) |
| | Patent Diversification Index (PDI) | $[1 - \Sigma(\text{Share of Each Technical Field in an Enterprise})^2]$ |
| | Patent Competitive Position Index (PCPI) | $\Sigma[[\Sigma \text{ (SEI Index Per Technical Field)}] \times(\text{Share of Each Company Per Technical Field})] \times (1 + \text{Excess Growth Rate})$ |
| | Average Patent Competitive Position Index (Average PCPI) | (Patent Competitive Position Index (PCPI))/(Number of Technical Fields covered by Company's Patent Applications (Average in 3 Years)) |
| (PKA) Characteristic Keywords | Characteristic Keywords | (Selected Keywords Having an Appearance Frequency That is Not Large in All Patent Publications and That is Large in Patent Publications of the Same Company) |
| | Number of Characteristic Keywords | (Representation of Character of an Enterprise by the Number of Keywords under a Constant Condition of Selecting the Characteristic Keywords) |
| (PSI) Patent Similarity Analysis | Patent Similarity Index | (Ratio of Patent Publications Having the Keyword of the Subject Patent Publication within a Population) |
| | Patent Similarity Index to the Same Company (PSIself) | (Patent Similarity Index (PSI) When the Population is the Same Company's Patent Publications) |
| | Patent Similarity Index to All Companies (PSIall) | (Patent Similarity Index (PSI) When the Population is All Patent Publications Including the Other Companies' Patent Publications) |
| | Normal Patent Publication | (Patent Publications Having Significantly Large PSIall) |
| | Exceptional Patent Publication | (Patent Publications Having Significantly Small PSIall) |

FIG. 10

PATENT PROFITABILITY INDEXES
(CHEMICAL)

PATENT PROFITABILITY α
PATENT PROFITABILITY β
PATENT PROFITABILITY γ
PATENT PROFITABILITY δ

PATENT PROFITABILITY
(MILLION YEN)

ENTERPRISE

PATENT PROFITABILITY α
PATENT PROFITABILITY β
PATENT PROFITABILITY γ
PATENT PROFITABILITY δ

FIG. 11

MVA – PATENT PROFITABILITY $\alpha$
(CHEMICAL)
y = 31857x − 428713

FIG. 12

MVA – PATENT PROFITABILITY $\beta$
(CHEMICAL)
y = 10204x + 209950

FIG. 13

PATENT PROFITABILITY $\gamma$
(CHEMICAL)
y = 28292x + 170451

FIG. 14

MVA - PATENT PROFITABILITY $\delta$
(CHEMICAL)
y = 20951x + 187217

FIG. 15

PATENT PROFITABILITY $\alpha$ – R&D COST RATIO $\delta$
(CHEMICAL)
$y = 1.7748x + 13.532$

FIG. 16

PATENT PROFITABILITY $\alpha$ – R&D COST RATIO $\delta$
(ELECTRICAL EQUIPMENT)
$y = 1.5578x + 0.7415$

FIG. 17

PATENT PROFITABILITY $\beta$ – R&D COST RATIO $\delta$
(CHEMICAL)
$y = 3.8217x - 13.927$

FIG. 18

PATENT PROFITABILITY $\beta$ – R&D COST RATIO $\delta$
(ELECTRICAL EQUIPMENT)
$y = -0.277x + 2.1981$

FIG. 19

```
                    ┌──────────────────┐
                    │      START       │
                    └────────┬─────────┘
                             │  ┌─ S501
                    ┌────────▼─────────┐
                    │ SELECT ENTERPRISE FOR │
                    │ ENTERPRISE VALUE EVALUATION │
                    └────────┬─────────┘
                             │  ┌─ S502
                    ┌────────▼─────────┐
                    │ SELECT MENU FOR ENTERPRISE │
                    │   VALUE EVALUATION │
                    └────────┬─────────┘
                             │  ┌─ S503
                    ◇ SELECT COMBINATION ◇
```

| ACQUIRE MANAGEMENT-FINANCE INFORMATION — S604 | ACQUIRE PATENT INFORMATION — S504 |
| CALCULATE MANAGEMENT-FINANCE INFORMATION — S605 | CALCULATE PATENT INFORMATION — S505 |
| ORGANIZE CALCULATION RESULT OF MANAGEMENT-FINANCE INFORMATION — S606 | ORGANIZE CALCULATION RESULT OF PATENT INFORMATION — S506 |

CREATE GRAPH — S507

OUTPUT GRAPH — S508

DETERMINE ENTERPRISE VALUE — S509

END

FIG. 20

ENTERPRISE VALUE EVALUATION
INPUT CONDITION SETTING (2)

SELECT CONDITIONS IN THE WINDOWS BELLOW

BACK
SET

TARGET (1)

| All industries | | |
|---|---|---|
| Industry | Food | ☐ |
| Enterprise | Ceramic | ☐ |
| Other unit | Steel, nonferrous and metal | ☐ |
| | Machinery and shipbuilding | ☐ |
| | Electrical equipment | ■ |
| | Automobile & transport machine | ☐ |
| | Fabric, pulp and paper | ☐ |
| | Precision equipment | ☐ |
| | Other manufacturing | ☐ |
| | Construction | ☐ |
| | Information & telecommunication | ☐ |
| | Electricity and gas | ☐ |
| | Chemical | ☐ |
| | Service | ☐ |
| | Pharmaceutical | ☐ |

TARGET (2)

| Industry | ☐ |
|---|---|
| Enterprise | ☐ |
| Enterprise | |
| Other unit | |

Company name

Company code

Applicant code

Search

FIG. 21

EP 1 686 514 A1

ENTERPRISE VALUE EVALUATION MENU (1)

SELECT INDEXES IN THE WINDOWS BELLOW

| BACK |
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ■ | (PS) Patent stock related index | ☐ | | |

FIG. 22

EP 1 686 514 A1

ENTERPRISE VALUE EVALUATION MENU (1)

| BACK |
| SET |

SELECT INDEXES IN THE WINDOWS BELLOW

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ■ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | | |

FIG. 23

ENTERPRISE VALUE EVALUATION MENU (3)

SELECT INDEXES IN THE WINDOWS BELLOW

BUSINESS, PROFIT AND MARKET VALUE

(A) Investment index ☐
(B) Management-finance analysis index ☐
(C) Profit related index ☐
(D) Excess profit analysis index ☐
(M) Market evaluation related index ☐
(PE) Patent profitability index ☐

R&D AND PATENT

(R) Research and development related index
(PA) Patent application related index
(PB) Examination request related index
(PT) Patent acquisition (registration) related index
(PP) Patent productivity index
(PS) Patent stock related index

☐ R&D cost ratio $\alpha$
☐ R&D cost ratio $\beta$
☐ R&D cost ratio $\gamma$
■ R&D cost ratio $\delta$
☐ Number of inventors
☐ Inventor ratio
☐ R&D cost per inventor

PATENT PORTFOLIO

(PAP) Patent application portfolio analysis ☐
(PKA) Characteristic keyword list ☐
(PSI) Patent similarity analysis ☐

BACK
SET

FIG. 24

**ENTERPRISE VALUE EVALUATION**
**OUTPUT CONDITION SETTING**

SELECT CONDITIONS IN THE WINDOWS BELLOW

| BACK |
|---|
| SET |

MAP POSITION

| | |
|---|---|
| 1 map | ■ |
| 2 maps | ☐ |
| 1 data sheet | ☐ |
| 2 data sheets | ☐ |
| 1 map with data | ☐ |
| 2 maps with data | ☐ |
| 1 map with comment | ☐ |
| 2 maps with comment | ☐ |
| 1 map with data and comment | ☐ |
| 2 maps with data and comment | ☐ |

OUTPUT DATA

| | | |
|---|---|---|
| R&D cost ratio $\alpha$ | none | ☐ |
| R&D cost ratio $\beta$ | top 5 | ☐ |
| R&D cost ratio $\gamma$ | top 10 | ☐ |
| R&D cost ratio $\delta$ | top 15 | ☐ |
| COMMENT | top 20 | ■ |
| (free entry) | numerical input | ☐ |

## INTERNATIONAL SEARCH REPORT

| International application No. |
| --- |
| PCT/JP2004/003933 |

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-352071 A (Masakazu NAKAI), 06 December, 2002 (06.12.02), Abstract (Family: none) | 1-42 |
| A | WO 00/60495 A2 (AURIGIN SYSTEMS INC.), 12 October, 2000 (12.10.00), Abstract & JP 2003-527647 A | 1-42 |
| A | WO 2000/75851 A1 (STOCKPRICEPREDICTOR COM LLC.), 14 December, 2000 (14.12.00), Abstract & JP 2004-500617 A | 1-42 |

☐ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 April, 2004 (27.04.04) | 18 May, 2004 (18.05.04) |

| Name and mailing address of the ISA/ Japanese Patent Office | Authorized officer |
| --- | --- |
| Facsimile No. | Telephone No. |

Form PCT/ISA/210 (second sheet) (January 2004)

75